# EUROPEAN PATENT SPECIFICATION

(11) **EP 4 391 541 B1**
(45) Date of publication and mention of the grant of the patent: **25.11.2026**
(21) Application number: 22923454.7
(22) Date of filing: 30.11.2022
(51) Int. Cl.: H04N 19/57, H04N 19/58, H04N 19/105, H04N 19/172, H04N 19/176, H04N 19/117, H04N 19/109, H04N 19/577, H04N 19/31

(54) **MOTION ESTIMATION METHOD AND APPARATUS IN ENCODING PROCESS, DEVICE, STORAGE MEDIUM, AND PROGRAM PRODUCT**
BEWEGUNGSSCHÄTZUNGSVERFAHREN UND -VORRICHTUNG IN EINEM CODIERUNGSPROZESS, VORRICHTUNG, SPEICHERMEDIUM UND PROGRAMMPRODUKT
PROCÉDÉ ET APPAREIL D'ESTIMATION DE MOUVEMENT DANS UN PROCESSUS DE CODAGE, DISPOSITIF, SUPPORT DE STOCKAGE ET PRODUIT PROGRAMME

(30) Priority: 28.01.2022 CN 202210105603
(43) Date of publication of application: 26.06.2024
(73) Proprietor: Tencent Technology (Shenzhen) Company Limited, Shenzhen, Guangdong 518057 (CN)
(72) Inventor: ZHANG, Hongbin, Shenzhen, Guangdong 518057 (CN); KUANG, Wei, Shenzhen, Guangdong 518057 (CN)
(74) Representative: Nederlandsch Octrooibureau
(86) International application number: PCT/CN2022/135634
(87) International publication number: WO 2023/142663

(56) References cited:
- CN-A- 102 055 977
- CN-A- 106 034 236
- CN-A- 110 839 155
- US-A1- 2008 002 774
- US-A1- 2008 008 242
- US-A1- 2011 110 429
- US-A1- 2013 170 549
- US-B1- 10 798 380
- RHEE CHAE EUN: "Skipping Prediction Directions Based on the Cost Relationship between Multi-Directional Predictions for an HEVC Encoder", IEICE TRANSACTIONS ON INFORMATION AND SYSTEMS, vol. E97.D, no. 9, 1 January 2014 (2014-01-01), JP, pages 2541 - 2544, XP093227248, ISSN: 0916-8532, DOI: 10.1587/transinf.2014EDL8006

## Description

### RELATED APPLICATION

This application claims priority to Chinese Patent Application No. 202210105603.2 filed on January 28, 2022, which is incorporated by reference in its entirety.

### FIELD OF THE TECHNOLOGY

The present disclosure relates to the field of video coding technologies, and in particular, to a motion estimation method and apparatus in a coding process, a device, a storage medium, and a program product.

### BACKGROUND OF THE DISCLOSURE

Motion estimation is a widely used technology in video coding and processing in the field of video compression. In a related technology, when a coder performs motion estimation on a code block of a video frame, to improve coding accuracy, motion estimation is generally performed in a relatively large search range, for example, search is performed on pictures corresponding to multiple reference picture lists, so as to complete motion estimation on the code block. Although motion estimation accuracy in a coding process is improved in this manner, motion estimation efficiency of the code block is low, and a large amount of computing power is consumed.

An example of that is provided in document US 2011/110429. The documents US 10798380 and US 2008/008242 disclose further in a hybrid video encoder a decision for a given inter prediction mode based on that the number of adjacent blocks of the current block coded with said mode exceeds a given threshold.

### SUMMARY

Embodiments of the present disclosure provide a motion estimation method and apparatus in a coding process, an electronic device, a computer readable storage medium, and a computer program product, which can improve motion estimation efficiency in a video frame coding process.

An embodiment of the present disclosure provides a motion estimation method and apparatus according to the appended claims.

An embodiment of the present disclosure provides a computer device, where the computer device includes an input device, an output device, a processor, and a computer storage medium, the processor and the computer storage medium are connected to each other, the computer storage medium is configured to store a computer program, and the processor is configured to invoke the computer program to execute the motion estimation method in the foregoing coding process.

An embodiment of the present disclosure provides a computer readable storage medium. The computer readable storage medium stores a computer program. When the computer program is executed by a processor, the motion estimation method in a coding process is implemented.

An embodiment of the present disclosure provides a computer program product, and the computer program product includes a computer program. The computer program is stored in a computer readable storage medium. When being executed by a processor of a computer device, the computer program performs the motion estimation method in a coding process.

The technical solutions provided in the embodiments of the present disclosure may bring the following beneficial effects:

obtaining a to-be-coded video frame, and determining a to-be-coded target code block from the to-be-coded video frame; obtaining reference motion information of an auxiliary code block of the target code block; determining a target reference picture search range of the target code block from M reference picture lists according to picture search range information indicated by the reference motion information, M being an integer greater than 1; and performing motion estimation on the target code block according to the target reference picture search range. In this way, the reference motion information of the auxiliary code block can indicate a picture search range, and the reference picture search range of the code block is determined by using the picture search range information indicated by the reference motion information, which can reduce a quantity of reference picture lists or reference pictures for searching for the target code block, skip searching in some reference picture lists or some reference pictures during motion estimation, reduce a calculation amount, reduce time complexity of motion estimation, and improve motion estimation efficiency of a video frame coding process.

### BRIEF DESCRIPTION OF THE DRAWINGS

FIG. 1 is a schematic flowchart of a motion estimation method in a coding process according to an embodiment of the present disclosure.
FIG. 2A is a schematic diagram of an adjacent code block adjacent to a target code block according to an embodiment of the present disclosure.
FIG. 2B is a schematic diagram of a coding framework of common video coding according to an embodiment of the present disclosure.
FIG. 3 is a schematic flowchart of another motion estimation method in a coding process according to an embodiment of the present disclosure.
FIG. 4 is a schematic diagram of motion estimation according to an embodiment of the present disclosure.
FIG. 5 is a schematic structural diagram of a motion estimation apparatus in a coding process according to an embodiment of the present disclosure.
FIG. 6 is a schematic structural diagram of a computer device according to an embodiment of the present disclosure.

### DESCRIPTION OF EXAMPLES AND

### EMBODIMENTS

The technical solutions in embodiments of the present disclosure are clearly and completely described in the following with reference to the accompanying drawings in the embodiments of the present disclosure. Apparently, the described embodiments are merely some rather than all of the embodiments of the present disclosure. All other embodiments obtained by a person of ordinary skill in the art based on the embodiments of the present disclosure without making creative efforts shall fall within the protection scope of the present disclosure.

An embodiment of the present disclosure provides a motion estimation solution in a coding process. The motion estimation solution in a coding process provides a fast algorithm for motion estimation in a coding process, so that motion estimation of a code block in a video frame can be accelerated. A general principle of a fast algorithm involved in a motion estimation solution in a coding process is as follows: For a video frame that needs to be coded, motion estimation (ME) may be performed on a target code block in the to-be-code video frame by using motion information of adjacent code blocks that are in a time domain and a space domain and that are adjacent to a target code block, and motion information included in history-based motion vector prediction (HMVP). First, at least one of motion information of N adjacent code blocks adjacent to the target code block and a history-based motion vector prediction list may be obtained, where the HMVP includes motion information, and N may be an integer greater than or equal to 1; and the history-based motion vector prediction list (which may be referred to as a reference code block list later) includes motion information of a code block that has been coded before the target code block and motion information of a coded block. Then, reference motion information of an auxiliary code block is determined from at least one of the motion information of the N adjacent code blocks and the motion information included in the reference code list, and a target reference picture search range is determined for the target code block from M reference picture lists based on picture search range information indicated by the reference motion information of the auxiliary code block. M is an integer greater than 1, and the auxiliary code block may be all or some of code blocks of the N adjacent code blocks and a reference code block recorded in the reference code list. The target reference picture search range is allowed to include only picture search ranges corresponding to some of the M reference picture lists. Then, motion estimation is performed on the target code block based on the target reference picture search range, to obtain a target motion estimation parameter of the target code block. By using the reference motion information of the auxiliary code block, a quantity of reference picture lists for searching for the target code block can be reduced, and search for some reference picture lists when motion estimation is performed is skipped, thereby reducing time complexity of motion estimation, and accelerating motion estimation and video compression efficiency of the target code block.

In an example in addition to skipping some reference picture lists during motion estimation, this embodiment of the present disclosure may also skip some reference pictures during motion estimation. First, a condition parameter of an auxiliary code block of a reference search picture may be used when reference picture search is performed based on the reference motion information of the auxiliary code block, and when the condition parameter meets a filtering condition, the reference search picture may be used as the target reference picture search range of the target code block. The reference search picture may be one or more reference pictures in the M reference picture lists. For example, the M reference picture lists include a reference search picture 1. If a condition parameter of an auxiliary code block of the reference search picture 1 in the M reference picture lists meets a filtering condition, the reference search picture 1 is used as the target reference picture search range of the target code block, that is, when reference picture search is performed, the reference search picture 1 may be directly searched, so as to perform motion estimation on the target code block.

When the condition parameter does not meet the filtering condition, it means that when motion estimation is performed on the auxiliary code block, the reference search picture is rarely used. When motion estimation is performed on the target code block, the auxiliary code block may be used as a reference, and the reference search picture may not be used to some extent to perform motion estimation. Therefore, when motion estimation is performed on the target code block, the reference search picture may be directly skipped. For example, if the condition parameter of the auxiliary code block of the reference search picture 1 in the M reference picture lists does not meet the filtering condition in the foregoing example, it means that when motion estimation is performed on the auxiliary code block, the reference search picture 1 is not used, and when motion estimation is performed on the target code block, search on the reference search picture 1 may be directly skipped. In this manner, a quantity of reference pictures for searching for the target code block can be reduced, time complexity of motion estimation can be reduced, and motion estimation efficiency and video compression efficiency can be improved.

In an example this embodiment of the present disclosure further provides a motion estimation parameter search reset mechanism during motion estimation, which can ensure stability of a fast algorithm. Before at least one of the motion information of the N adjacent code blocks adjacent to the target code block and the motion information of the reference code block is obtained, it may be determined whether the target code block can enable a fast algorithm. If it is determined that the target code block can use the fast algorithm, at least one of the motion information of the N adjacent code blocks adjacent to the target code block and the motion information of the reference code block may be obtained. If it is determined that the target code block cannot use the fast algorithm, the M reference picture lists are all used as the target reference picture search range of the target code block. By using the motion estimation parameter search reset mechanism, local optimization can be prevented when fast motion estimation is performed on a code block, that is, motion estimation is prevented from always being performed on a code block included in a to-be-coded video frame by using the same reference picture list or the same reference picture, thereby avoiding a problem that some motion estimation parameters cannot be updated when motion estimation is performed on the code block.

A motion estimation solution in a coding process provided in an embodiment of the present disclosure has the following beneficial effects: On one hand, a target reference picture search range is determined from M reference picture lists according to at least one of motion information of N adjacent code blocks adjacent to a target code block and motion information of a reference code block. The target reference picture search range may refer to at least one of some reference picture lists in the M reference picture lists or some reference pictures. In this way, a quantity of reference picture lists or reference pictures for searching for the target code block is reduced, and some reference picture lists or reference pictures during motion estimation are skipped, thereby reducing time complexity of motion estimation, and accelerating motion estimation on the target code block and reducing a calculation amount of motion estimation. On the other hand, a motion estimation parameter search reset mechanism in motion estimation can prevent falling into local optimum when fast motion estimation is performed on a code block, prevent a code block included in a video frame from always performing motion estimation by using the same reference picture list or the same reference picture, and avoid a problem that some motion parameters cannot be updated when motion estimation is performed on a code block.

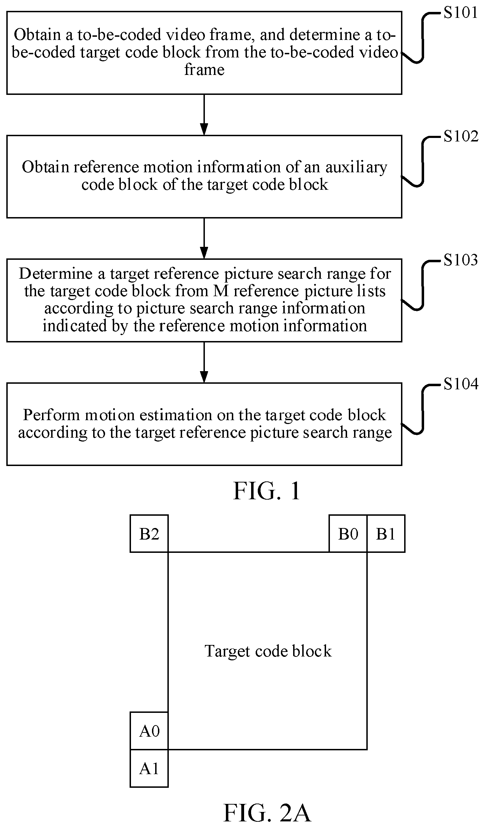

Based on the foregoing provided motion estimation solution in the coding process, referring to FIG. 1, FIG. 1 is a schematic flowchart of a motion estimation method in a coding process according to an embodiment of the present disclosure. The motion estimation method in a coding process may be performed by a computer device, and the computer device may be a terminal device or a server. In actual application, the motion estimation method in a coding process may be performed by a coder in a computer device. The terminal device may be a smartphone, a tablet computer, a notebook computer, a desktop computer, an intelligent voice interaction device, a smart home appliance, an in-vehicle terminal, an aircraft, or the like. The server may be an independent physical server, or may be a server cluster or a distributed system formed by multiple physical servers, or may be a cloud server that provides basic cloud computing service such as a cloud service, a cloud database, cloud computing, a cloud function, cloud storage, a network service, cloud communication, a middleware service, a domain name service, a security service, a content distribution network (CDN), big data, and an artificial intelligence platform. The motion estimation method in a coding process described in this embodiment includes the following steps S101-S104.

S101: Obtain a to-be-coded video frame, and determine a to-be-coded target code block from the to-be-coded video frame. The to-be-coded video frame may be a picture collected in real time, or the to-be-coded video frame may be a picture collected in advance. The to-be-coded video frame may be any frame in a live video, a vehicle driving video, a vehicle real-time running video, a game video, an entertainment video, or the like. The to-be-coded video frame may include one or more code blocks. A size of each code block may be the same, or may be different. For example, a size of a code block 1 in the to-be-coded video frame may be 128, and a size of a code block 2 may be 64. In an embodiment, the computer device may randomly obtain, from the code blocks included in the to-be-coded video frame, one code block as the to-be-coded target code block, or each code block included in the to-be-coded video frame is numbered, and the computer device may determine, based on the number, all the code blocks included in the to-be-coded video frame as the to-be-coded target code blocks.

S102: Obtain reference motion information of an auxiliary code block of the target code block.

The reference motion information may include a reference picture list, a reference picture in a reference picture list (or a reference picture index in the reference picture list), and a motion vector (MV). The motion vector is a displacement between the target code block and a reference block (a reference block is a code block that meets a similarity threshold with the target code block).

In an example because motion estimation parameters of adjacent code blocks adjacent in a time domain and a space domain are highly correlated, there is a merge mode in versatile video coding (VVC), and motion information of an adjacent code block may be reused by a current code block. Therefore, in this example of the present disclosure, the auxiliary code block may be N adjacent code blocks adjacent to the target code block, and the auxiliary code block may be all or some of code blocks in the N adjacent code blocks, where N is an integer greater than or equal to 1, and being adjacent here means being directly adjacent to the target code block. For example, in FIG. 2A, N is 5, and the N adjacent code blocks adjacent to the target code block may be a lower left adjacent code block (that is, A1 in FIG. 2A), a lower adjacent code block (that is, A0 in FIG. 2A), an upper left adjacent code block (that is, B2 in FIG. 2A), an upper adjacent code block (that is, B0 in FIG. 2A), and an upper right adjacent code block (that is, B1 in FIG. 2A). Correspondingly, the reference motion information of the auxiliary code block may include motion information of the N adjacent code blocks adjacent to the target code block.

In another example because an HMVP technology is introduced into the merge mode in versatile video coding (VVC), so as to extend the application scope of the merge mode, the merge mode may include motion information of a code block that is not directly adjacent to the target code block in space, and the motion information of the code block that is not directly adjacent to the target code block may be used for describing mutual shielding between moving objects, and thus the same object exists in a non-adjacent code block. In addition, by using the HMVP technology, a motion information queue (that is, a reference code block list) with a length of 5 may be constructed and maintained. The reference code block list may be used not only for recording available motion information for decoding, but also to be used as a reference when motion estimation is performed on the current code block (that is, the target code block), and when the current code block is coded, motion information in the HMVP list may be filled in a merge list from head to end until it is fully filled. An update principle of the HMVP list is first-in-first-out. Therefore, in this embodiment of the present disclosure, the auxiliary code block may be a code block in the reference code block list, and the auxiliary code block herein may be some code blocks or all code blocks in the reference code block list. The reference code block list includes a code block that has been previously coded before the target code block. The reference code block list may include N adjacent code blocks adjacent to the target code block (where the N adjacent code blocks are code blocks directly adjacent to the target code block) and code blocks that are not directly adjacent to the target code block in space. Correspondingly, the reference motion information of the auxiliary code block may include motion information included in the reference code block list.

In an embodiment, the N adjacent code blocks adjacent to the target code block and code blocks in the reference code block list may be used as auxiliary code blocks, so that subsequent reference motion information based on the auxiliary code blocks can better determine a target reference picture search range of the target code block. Correspondingly, the reference motion information of the auxiliary code block may include motion information of the N adjacent code blocks adjacent to the target code block and the motion information included in the reference code block list, where N is an integer greater than or equal to 1.

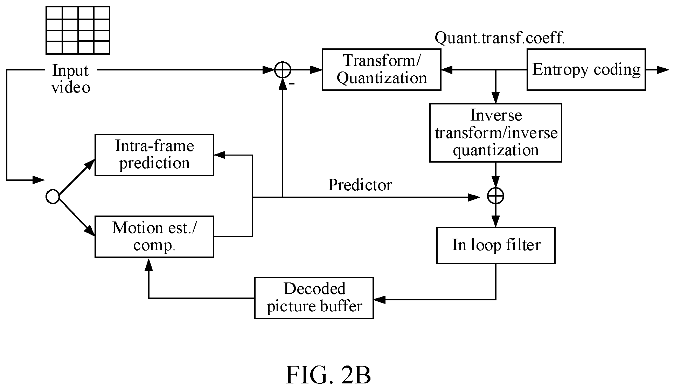

In an embodiment, referring to FIG. 2B, FIG. 2B is a schematic diagram of a coding framework of VVC. The framework includes a decoded picture buffer (DPB) list. The decoded picture buffer list maintains reference motion information about the auxiliary code block. The computer device may obtain the reference motion information of the auxiliary code block from the decoded picture buffer list, and then perform step S103.

S103: Determine a target reference picture search range for the target code block from M reference picture lists according to picture search range information indicated by the reference motion information, M being an integer greater than 1.

The picture search range information herein may include at least one of a reference picture list or a reference picture (reference picture index) in the reference picture list. The reference picture list may include at least two of a first reference picture list, a second reference picture list, and a bidirectional reference picture list (or referred to as a bidirectional reference frame list). The bidirectional reference picture list includes the first reference picture list and the second reference picture list. The first reference picture list includes multiple frames of reference pictures, the second reference picture list includes multiple frames of reference pictures, and the target reference picture search range may include a target reference picture list and a target reference picture in the target reference picture list. The target reference picture list may at least include any one of the first reference picture list and the second reference picture list. The first reference picture list may be a forward reference picture list (or referred to as a list0 reference picture list or a forward reference list), and the second reference picture list may be a backward reference picture list (or referred to as a list1 reference picture list or a backward reference list).

Next, an implementation of step S103 is described:
(1) Because the auxiliary code block is coded (or subject to motion estimation) by using a reference picture list in M reference picture lists, and the auxiliary code block has a correlation with the target code block, the target code block is also coded by using the reference picture list in the M reference picture lists to a great extent. In this case, the picture search range information includes a reference picture list. Using the reference picture list indicated by the reference motion information of the auxiliary code block as a picture search range can reduce a quantity of reference picture lists for searching for the target code block, so that motion estimation of the target code block can be accelerated, and coding complexity is reduced.

In a claimed embodiment, the computer device may determine a first condition parameter according to the picture search range information indicated by the reference motion information of the auxiliary code block, where the first condition parameter may include at least one of a quantity of first-type auxiliary code blocks and an area of a first-type auxiliary code block, the first-type auxiliary code block is a code block for searching for a reference picture in a first reference picture list in the M reference picture lists, and the first-type auxiliary code block belongs to auxiliary code blocks of the target code block. There is one or more first-type auxiliary code blocks. Then the computer device may determine whether the first condition parameter meets a first filtering condition. If it is determined that the first condition parameter meets the first filtering condition, the first reference picture list is determined as the target reference picture search range of the target code block, that is, when reference picture search is performed, the first reference picture list needs to be searched. If it is determined that the first condition parameter does not meet the first filtering condition, the first reference picture list is not used as the target reference picture search range of the target code block, that is, when reference picture search is performed, the first reference picture list may be skipped. The first filtering condition may include at least one of the following: The quantity of first-type auxiliary code blocks is greater than a quantity threshold, and a ratio of the area of the first-type auxiliary code block to an area sum of all auxiliary code blocks is greater than an area ratio threshold. The first reference picture list is a forward reference list.

When the first condition parameter is the quantity of first-type auxiliary code blocks, and the first filtering condition is that the quantity of first-type auxiliary code blocks is greater than the quantity threshold, the computer device may count the quantity of first-type auxiliary code blocks according to picture search range information indicated by the reference motion information of the auxiliary code block, and determine whether the quantity of first-type auxiliary code blocks is greater than the quantity threshold; if the quantity is greater than the quantity threshold, determine that the first condition parameter meets the first filtering condition; or if the quantity of first-type auxiliary code blocks is less than or equal to the quantity threshold, determine that the first condition parameter does not meet the first filtering condition.

When the first condition parameter is the area of the first-type auxiliary code block, it is assumed that the area of the first-type auxiliary code block is a first area, the area sum of all the auxiliary code blocks is a second area, and the first filtering condition is that a ratio of the first area to the second area is greater than the area ratio threshold. The computer device may determine the first-type auxiliary code block according to the picture search range information indicated by the reference motion information of the auxiliary code block, and calculate the area of the first-type auxiliary code block and the area sum of all the auxiliary code blocks; then calculate the area ratio between the area of the first-type auxiliary code block and the area sum of all the auxiliary code blocks, determine whether the area ratio is greater than the area ratio threshold, and if it is determined that the area ratio is greater than the area ratio threshold, determine that the first condition parameter meets the first filtering condition; or if it is determined that the area ratio is less than or equal to the area ratio threshold, determine that the first condition parameter does not meet the first filtering condition. There may be one or more first-type auxiliary code blocks. When there are multiple first-type auxiliary code blocks, the area of the first-type auxiliary code block refers to a sum of areas of all first-type auxiliary code blocks. For example, the area ratio threshold is set to 0.5, the first filtering condition is that the ratio of the first area to the second area is greater than 0.5, the quantity of auxiliary code blocks is 3 (which are respectively a code block 1, a code block 2, and a code block 3), and the first-type auxiliary code blocks are the code block 1 and the code block 2, and an area sum of the code block 1 and the code block 2 is calculated to obtain a first area sum. An area sum of the code block 1, the code block 2, and the code block 3 is calculated to obtain a second area sum. Then, the computer device may calculate that the area ratio between the first area sum and the second area sum is 0.6, where the area ratio 0.6 is greater than the area ratio threshold 0.5, and determine that the first condition parameter meets the first filtering condition.

The quantity threshold and the area ratio threshold may be determined according to at least one of a temporal layer at which the to-be-coded video frame is located or a target code block size. The temporal layer may be a temporal layer 0 (a temporal layer k=0), a temporal layer 1 (a temporal layer k=1), a temporal layer 2 (a temporal layer k=2), a temporal layer 3 (a temporal layer k=3), or the like. In some embodiments, a quantity of temporal layers may be different according to a coder type. For example, the quantity of temporal layers corresponding to a coder 1 may be 3 (that is, temporal layers 0-2), or a quantity of temporal layers corresponding to a coder 2 may be 4 (that is, temporal layers 0-3). The target code block size may be determined according to the temporal layer of the to-be-coded video frame. For example, when the temporal layer is the temporal layer 0, the target code block size may be 256, and when the temporal layer is the temporal layer 1, the target code block size is 128.

In an example when the quantity threshold and the area ratio threshold are determined according to the temporal layer at which the to-be-coded video frame is located, the higher the temporal layer at which the to-be-coded video frame is located, the smaller the quantity threshold and the area ratio threshold are. For example, the quantity threshold is used as an example, a relationship between the temporal layer and the quantity threshold may be preset. For example, the quantity threshold corresponding to the temporal layer 0 is 10, and the quantity threshold corresponding to the temporal layer 5 is 2.

In another example, when the quantity threshold and the area ratio threshold are determined according to the size of the code block, a larger size of the code block results in a smaller quantity threshold and area ratio threshold, that is, a preset mapping relationship or correspondence exists between the size of the code block and the quantity threshold, and a preset mapping relationship or correspondence also exists between the size of the code block and the area ratio threshold. The mapping relationship or the correspondence may be a linear correlation. For example, the correspondence between the size of the code block and the quantity threshold may be preset by using the quantity threshold as an example. For example, the quantity threshold corresponding to a size 64 of the code block is 10, and the quantity threshold corresponding to a size 256 of the code block is 2. A manner of obtaining the quantity threshold is: obtaining the quantity threshold corresponding to the size of the target code block from the correspondence.

In an example when the quantity threshold and the area ratio threshold are determined according to the temporal layer at which the to-be-coded video frame is located and the size of the target code block, a correspondence among the quantity threshold, the temporal layer at which the to-be-coded video frame is located, and a code block size, and a correspondence among the area ratio threshold, the temporal layer at which the to-be-coded video frame is located, and the code block size may be preset, that is, when the temporal layer at which the to-be-coded video frame is located and the code block size are fixed, the quantity threshold and the area ratio threshold may be uniquely determined. Using the quantity threshold as an example, when the temporal layer 0 at which the to-be-coded video frame is located and the size of the code block being 256, the corresponding quantity threshold is 10; when the temporal layer 1 at which the to-be-coded video frame is located and the size of the code block being 128, the corresponding quantity threshold is 10; or when the temporal layer 1 at which the to-be-coded video frame is located and the size of the code block being 128, the corresponding quantity threshold is 4.

In the foregoing cases, a manner of obtaining the quantity threshold is: obtaining at least one of the temporal layer at which the to-be-coded video frame is located or the size of the target code block, and then determining the quantity threshold or the area ratio threshold from the correspondence according to at least one of the temporal layer or the size of the target code block. For example, the temporal layer at which the to-be-coded video frame is located is 1, and the size of the target code block is 128. The quantity threshold is determined from the correspondence according to the temporal layer and the size of the target code block, that is, the first filtering condition is that the quantity of first-type auxiliary code blocks is greater than the quantity threshold 4. Similarly, the area ratio threshold may be obtained.

In an embodiment, a second condition parameter is determined according to the picture search range information indicated by the reference motion information of the auxiliary code block, where the second condition parameter includes at least one of a quantity of second-type auxiliary code blocks or an area of the second-type auxiliary code block, the second-type auxiliary code block is a code block that performs reference picture search on a second reference picture list in the M reference picture lists, and the second-type auxiliary code block belongs to the auxiliary code blocks of the target code block. Then, it is determined whether the second condition parameter meets a second filtering condition, and if it is determined that the second condition parameter meets the second filtering condition, the second reference picture list is used as the target reference picture search range of the target code block. If it is determined that the second condition parameter does not meet the second filtering condition, the second reference picture list is not used as the target reference picture search range, that is, the second reference picture list is skipped when reference picture search is performed. The second filtering condition may include at least one of the following: The quantity of second-type auxiliary code blocks is greater than the quantity threshold, and a ratio of a third area to a fourth area is greater than the area ratio threshold, where the third area is an area of the second-type auxiliary code block, and the fourth area is an area sum of all auxiliary code blocks. The second reference picture list is a backward reference list. The quantity threshold and the area ratio threshold may be determined according to at least one of a temporal layer at which the to-be-coded video frame is located or a target code block size. For an implementation of determining whether the second condition parameter meets the second filtering condition, refer to the foregoing implementation of determining whether the first condition parameter meets the first filtering condition.

In an embodiment, before the second condition parameter is determined according to the picture search range information indicated by the reference motion information of the auxiliary code block, whether the first condition parameter meets the first filtering condition may be first determined. If the first condition parameter does not meet the first filtering condition, the second condition parameter may be determined according to the picture search range information indicated by the reference motion information of the auxiliary code block, where the second condition parameter includes at least one of the quantity of the second-type auxiliary code blocks and the area of the second-type auxiliary code block, and the second-type auxiliary code block is a code block for performing reference picture search on the second reference picture list in the M reference picture lists, where the second-type auxiliary code block belongs to the auxiliary code blocks of the target code block. If the second condition parameter meets the second filtering condition, the second reference picture list is determined as the target reference picture search range of the target code block. If the second condition parameter does not meet the second filtering condition, at least the first reference picture list and the second reference picture list in the M reference picture lists are determined as the target reference picture search range of the target code block.

Because the auxiliary code block is coded (or subject to motion estimation) by using a reference picture (RP) of a reference picture list in the M reference picture lists, and the auxiliary code block is associated with the target code block, the target code block is also coded by using the reference picture of the reference picture list in the M reference picture lists to a great extent, for example, the auxiliary code block is coded by using a reference picture 1 of the first reference picture list, and the target code block is also coded by using the reference picture 1 of the first reference picture list to a great extent. In this case, the picture search range information may include a reference picture list and a reference picture (or an index of the reference picture) included in the reference picture list. Using the reference picture list and the reference picture that are included in the reference motion information of the auxiliary code block as a picture search range of the code block can reduce a quantity of reference picture lists and a quantity of reference pictures for searching for the target code block, so that motion estimation can be performed on the target code block more quickly, thereby reducing coding complexity.

In an embodiment, after the first reference picture list is determined, the reference picture in the first reference picture list may be screened, so as to accelerate motion estimation of the target code block. If it is determined that the first condition parameter meets the first filtering condition, the target reference picture search range of the target code block may be determined based on the first reference picture list in the following manner: If the first condition parameter meets the first filtering condition, a third condition parameter is determined according to the reference picture corresponding to the reference motion information of the auxiliary code block, where the third condition parameter includes: at least one of a quantity of third-type auxiliary code blocks and an area of the third-type auxiliary code block, where the third-type auxiliary code block is a code block that performs reference picture search on a target reference picture in the first reference picture list, and the third-type auxiliary code block belongs to the auxiliary code blocks of the target code block. Then, it is determined whether the third condition parameter meets a third filtering condition. If the third condition parameter meets the third filtering condition, the target reference picture in the first reference picture list is determined as the target reference picture search range of the target code block. If the third condition parameter does not meet the third filtering condition, the target reference picture in the first reference picture list is not used as the target reference picture search range of the target code block, and when reference picture search is performed, search for the target reference picture in the first reference picture list is skipped, and another reference picture in the first reference picture list is searched. That is, the determining the first reference picture list as the target reference picture search range of the target code block includes: determining the target reference picture in the first reference picture list as the target reference picture search range of the target code block; and for the target reference picture in the first reference picture list, multiple auxiliary code blocks or large-area auxiliary code blocks of the target code block, the target reference picture is used as the reference picture search range.

The third filtering condition includes at least one of the following: The quantity of third-type auxiliary code blocks is greater than the quantity threshold and an area ratio between a fifth area and a sixth area is greater than the area ratio threshold, where the fifth area is the area of the third-type auxiliary code block, and the sixth area is an area sum of all the auxiliary code blocks. The quantity threshold and the area ratio threshold may be determined according to at least one of a temporal layer at which the to-be-coded video frame is located or a target code block size. There is a negative correlation between the temporal layer and the quantity threshold and the area ratio threshold, and there is a negative correlation between the size of the target code block and the quantity threshold and the area ratio threshold. The higher the temporal layer, the smaller the quantity threshold and the area ratio threshold. A larger size of the target code block results in a smaller quantity threshold and area ratio threshold.

In an example when the third condition parameter is the quantity of third-type auxiliary code blocks, and the third filtering condition is: The quantity of third-type auxiliary code blocks is greater than the quantity threshold, the process of determining whether the third condition parameter meets the third filtering condition is: If the first condition parameter meets the first filtering condition, determining the quantity of third-type auxiliary code blocks based on the reference picture corresponding to the reference motion information of the auxiliary code blocks, determining whether the quantity of third-type auxiliary code blocks is greater than the quantity threshold, and if the quantity is greater than the quantity threshold, determining that the third condition parameter meets the third filtering condition; or if it is determined that the quantity is less than or equal to the quantity threshold, determining that the third condition parameter does not meet the third filtering condition.

In a claimed embodiment, when the third condition parameter is the area of the third-type auxiliary code block, and the third filtering condition is that the area ratio between the area of the third-type auxiliary code block and the area sum of all the auxiliary code blocks is greater than the area ratio threshold, an implementation process of determining whether the third condition parameter meets the third filtering condition is: If the first condition parameter meets the first filtering condition, determining the third-type auxiliary code block based on the reference picture corresponding to the reference motion information of the auxiliary code block, calculating the area of the third-type auxiliary code block and the area sum of all the auxiliary code blocks, then calculating the area ratio between the area of the third-type auxiliary code block and the area sum of all the auxiliary code blocks, and determining whether the area ratio is greater than the area ratio threshold, and if it is determined that the area ratio is greater than the area ratio threshold, determining that the third condition parameter meets the third filtering condition; or if it is determined that the area ratio is less than or equal to the area ratio threshold, determining that the third condition parameter does not meet the third filtering condition. The quantity of third-type auxiliary code blocks may be one or more. When the quantity of third-type auxiliary code blocks is multiple, the area of the third-type auxiliary code block refers to an area sum of all the third-type auxiliary code blocks. For example, the third-type auxiliary code blocks are an auxiliary code block 1 and an auxiliary code block 2, and all auxiliary code blocks are respectively an auxiliary code block 1, an auxiliary code block 2, and an auxiliary code block 3. The computer device may calculate an area sum of the auxiliary code block 1 and the auxiliary code block 2 to obtain a third area sum, and calculate an area sum of the auxiliary code block 1, the auxiliary code block 2, and the auxiliary code block 3 to obtain a fourth area sum. Then, an area ratio between the third area sum and the fourth area sum is calculated, and it is determined whether the area ratio is greater than the area ratio threshold.

In an embodiment, after the second reference picture list is determined, the reference picture in the second reference picture list may be screened, so as to accelerate motion estimation of the target code block. If it is determined that the second condition parameter meets the second filtering condition, an implementation of using the second reference picture list as the target reference picture search range of the target code block may be: if it is determined that the second condition parameter meets the second filtering condition, determining a fourth condition parameter according to the reference picture corresponding to the reference motion information of the auxiliary code block, where the fourth condition parameter includes at least one of a quantity of fourth-type auxiliary code blocks or an area of the fourth-type auxiliary code block, the fourth-type auxiliary code block is a code block that performs reference picture search on a target reference picture in the second reference picture list, and the fourth-type auxiliary code block belongs to the auxiliary code blocks of the target code block; determining whether the fourth condition parameter meets a fourth filtering condition; and if the fourth condition parameter meets a fourth filtering condition, determining the target reference picture included in the second reference picture list as the target reference picture search range of the target code block; or if the fourth condition parameter does not meet the fourth filtering condition, not using the target reference picture included in the second reference picture list as the target reference picture search range of the target code block, that is, when reference picture search is performed, the target reference picture included in the second reference picture list is skipped. That is, the using the second reference picture list as the target reference picture search range of the target code block includes: using the target reference picture in the second reference picture list as the target reference picture search range of the target code block; and for the target reference picture in the second reference picture list, multiple auxiliary code blocks or large-area auxiliary code blocks of the target code block, the target reference picture is used as the reference picture search range.

For how to determine whether the fourth condition parameter meets the fourth filtering condition, refer to the foregoing manner of determining whether the third condition parameter meets the third filtering condition. For a manner of obtaining the quantity threshold and the area ratio threshold, refer to a corresponding implementation. Details are not described herein again.

In an embodiment, there may be a case in which the first condition parameter does not meet the first filtering condition, and the second condition parameter does not meet the second filtering condition. In this case, it means that the target reference picture search range cannot be determined from the M reference picture lists for the target code block based on the picture search range information indicated by the reference motion information. In this case, the computer device may determine at least the first reference picture list and the second reference picture list in the M reference picture lists as the target reference picture search range. In some embodiments, all the M reference picture lists may be used as the target reference picture search range. For example, when the M reference picture lists include the first reference picture list, the second reference picture list, and a bidirectional reference picture list, all the first reference picture list, the second reference picture list, and the bidirectional reference picture list may be used as the target reference picture search range.

(2) Because the auxiliary code block is coded (or subject to motion estimation) by using a reference picture in M reference picture lists, and the auxiliary code block has a correlation with the target code block, the target code block is also coded by using the reference picture in the M reference picture lists to a great extent. For example, the auxiliary code block is coded by using a reference picture 1 in the M reference picture lists, and the target code block is also coded by using the reference picture 1 to a great extent. In this case, the picture search range information includes a reference picture or the picture search range information includes a picture index of the reference picture. The picture search range information indicated by the reference motion information of the auxiliary code block includes the reference picture, so that a quantity of reference pictures for searching for the target code block can be reduced, and motion estimation of the target code block can be accelerated.

In an embodiment, when the target reference picture search range of the target code block is determined, a reference search picture that needs to be searched may be determined by directly filtering the reference search picture in the multiple existing reference picture lists, and the reference search picture is determined as the target reference picture search range of the target code block. A different reference list does not need to be differentiated in a screening process. The computer device may determine a fifth condition parameter according to the picture search range information indicated by the reference motion information, where the fifth condition parameter includes at least one of a quantity of fifth-type auxiliary code blocks and an area of the fifth-type auxiliary code block, the fifth-type auxiliary code block is a code block that performs reference picture search on the reference search picture, and the fifth-type auxiliary code block belongs to the auxiliary code blocks of the target code block; and if the fifth condition parameter meets a fifth filtering condition, the reference search picture is used as the target reference picture search range of the target code block. Otherwise, the reference search picture is not used as the target reference picture search range of the target code block.

In an embodiment, the fifth-type auxiliary code block may be: a code block that performs reference picture search on reference search pictures in the M reference picture lists, and the fifth-type auxiliary code block belongs to auxiliary code blocks of the target code block. In this case, a manner of determining a target reference picture search range for the target code block from M reference picture lists according to picture search range information indicated by the reference motion information may be: determining a fifth condition parameter according to the picture search range information indicated by the reference motion information, where the fifth condition parameter includes at least one of the quantity of fifth-type auxiliary code blocks and the area of the fifth-type auxiliary code block. For example, the M reference picture lists include a forward reference list, a backward reference list, and a bidirectional reference list, the forward reference list and the bidirectional reference list all include a target reference picture 1, and the fifth-type auxiliary code block is a code block that performs reference picture search on the target reference picture 1 in the auxiliary code blocks. Then, it is determined whether the fifth condition parameter meets a fifth filtering condition. If the fifth condition parameter meets the fifth filtering condition, the reference search picture in the M reference picture lists is determined as the target reference picture search range of the target code block, that is, when reference picture search is performed, the reference search picture may be directly searched. If the fifth condition parameter does not meet the fifth filtering condition, the reference search picture in the M reference picture lists is not used as the target reference picture search range of the target code block, that is, when reference picture search is performed, search for the reference search picture is skipped, so as to reduce a quantity of reference pictures for searching for the target code block. When the reference search picture is used as the target reference picture search range of the target code block, a reference picture list in which the reference search picture is located is carried. In this way, when picture search is subsequently performed, the reference picture list to which the reference search picture belongs may be known. For example, referring to a reference picture list 1 to which the reference search picture 1 belongs, the reference search picture 1 is carried with the reference picture list 1. The fifth filtering condition may include at least one of the following: The quantity of fifth-type auxiliary code blocks is greater than the quantity threshold, and an area ratio between the area of the fifth-type auxiliary code block and the area sum of all the auxiliary code blocks is greater than the area ratio threshold.

In an example, the quantity of reference search pictures may be one or more. When the quantity of reference search pictures is multiple, multiple reference search pictures in the M reference picture lists may be determined as the target reference picture search range of the target code block. For example, there are five reference search pictures, and all the five reference search pictures may be used as the target reference picture search range of the target code block. When reference picture search is performed, the five reference search pictures need to be searched. Alternatively, some of the reference search pictures may be randomly selected from the multiple reference search pictures in the M reference picture lists as the target reference picture search range of the target code block. In this case, when reference picture search is performed, a selected reference search picture needs to be searched, and a reference search picture that is not selected is skipped. For example, there are 10 reference search pictures, and nine reference search pictures may be randomly selected as the target reference picture search range. When reference picture search is performed, the nine reference search pictures selected need to be searched, and an unselected reference search picture needs to be skipped.

When the fifth condition parameter is the quantity of fifth-type auxiliary code blocks, and the fifth filtering condition is that the quantity of fifth-type auxiliary code blocks is greater than the quantity threshold, the computer device may count the quantity of fifth-type auxiliary code blocks according to the picture search range information indicated by the reference motion information of the auxiliary code block, and then determine whether the quantity of fifth-type auxiliary code blocks is greater than the quantity threshold, and if the quantity is greater than the quantity threshold, determine that the fifth condition parameter meets the fifth filtering condition; or if the quantity is less than or equal to the quantity threshold, determine that the fifth condition parameter does not meet the fifth filtering condition. For example, the M reference picture lists include the reference search picture 1, and the quantity threshold is 4. A quantity of auxiliary code blocks that perform picture search on the reference search picture 1 is 5, and the quantity 5 is greater than the quantity threshold 4. The computer device determines that the fifth condition parameter meets the fifth filtering condition.

When the fifth condition parameter is the area of the fifth-type auxiliary code block, it is assumed that the area of the fifth-type auxiliary code block is a seventh area, and the area sum of all the auxiliary code blocks is an eighth area. The fifth filtering condition is that the area ratio between the seventh area and the eighth area is greater than the area ratio threshold. The computer device may determine the fifth-type auxiliary code block according to the picture search range information indicated by the reference motion information of the auxiliary code block, and calculate the area ratio between the fifth-type auxiliary code block and the area sum of all the auxiliary code blocks, to determine whether the area ratio is greater than the area ratio threshold; if it is determined that the area ratio is greater than the area ratio threshold, determine that the fifth condition parameter meets the fifth filtering condition; and if it is determined that the area ratio is less than the area ratio threshold, determine that the fifth condition parameter does not meet the fifth filtering condition. For example, the area ratio threshold is 0.15, and the fifth-type auxiliary code blocks are respectively an auxiliary code block 1 and an auxiliary code block 2. Then, the computer device may calculate an area sum of the auxiliary code block 1 and the auxiliary code block 2 to obtain an area sum 1, and calculate the area sum of all the auxiliary code blocks to obtain an area sum 2. Then, the area ratio between the area sum 1 and the area sum 2 is calculated as 0.2. The area ratio 0.2 is greater than the area ratio threshold 0.15, and it is determined that the fifth condition parameter meets the fifth filtering condition.

The quantity threshold and the area ratio threshold may be determined according to at least one of a temporal layer at which the to-be-coded video frame is located or a target code block size. In actual application, the temporal layer at which the to-be-coded video frame is located has a negative correlation with the quantity threshold and the area ratio threshold, and the size of the target code block has a negative correlation with the quantity threshold and the area ratio threshold. For example, a higher temporal layer at which the to-be-coded video frame is located causes a smaller quantity threshold and area ratio threshold. For another example, a larger size of the target code block causes a smaller quantity threshold and area ratio threshold. For obtaining of the quantity threshold and the area ratio threshold, references may be made to the implementation of the foregoing corresponding part, and details are not described herein again.

In an embodiment, if the fifth condition parameter meets the fifth filtering condition, an implementation of determining the reference search picture in the M reference picture lists as the target reference picture search range of the target code block may be as follows: If the fifth condition parameter meets the fifth filtering condition, determining the reference search picture in the M reference picture lists as the candidate reference picture search range, where the candidate reference picture search range includes the reference search picture and the reference picture list to which the reference search picture belongs, and then the computer device may determine a sixth condition parameter according to the picture search range information indicated by the reference motion information, where the sixth condition parameter may include at least one of a quantity of sixth-type auxiliary reference code blocks and an area of the sixth-type auxiliary reference code block. The sixth-type auxiliary reference code block is a code block that performs reference picture search on a first reference picture list of a candidate reference picture search range, and the sixth-type auxiliary reference code block belongs to the auxiliary code blocks of the target code block to determine whether the sixth condition parameter meets a sixth filtering condition. If it is determined that the sixth condition parameter meets the sixth filtering condition, the reference search picture in the first reference picture list and the first reference picture list are determined as the target reference picture search range of the target code block. If it is determined that the sixth condition parameter does not meet the sixth filtering condition, the reference search picture in the first reference picture list and the first reference picture list are not determined as the target reference picture search range of the target code block. That is, when reference picture search is performed, the reference picture search range of the first reference picture list is skipped. The sixth filtering condition may include at least one of the following: The quantity of sixth-type auxiliary code blocks is greater than the quantity threshold, and a ratio of the area of the sixth-type auxiliary code blocks to the area sum of all the auxiliary code blocks is greater than the area ratio threshold. The quantity threshold and the area ratio threshold may be determined according to at least one of a temporal layer at which the to-be-coded video frame is located or a target code block size. The higher the temporal layer, the smaller the quantity threshold and the area ratio threshold. A larger size of the target code block results in a smaller quantity threshold and area ratio threshold.

In an example, when the sixth condition parameter is the quantity of sixth-type auxiliary code blocks, and the sixth filtering condition is that the quantity of sixth-type auxiliary code blocks is greater than the quantity threshold, a manner of determining whether the sixth condition parameter meets the sixth filtering condition may be as follows: The computer device may determine the quantity of sixth-type auxiliary code blocks according to the picture search range information indicated by the reference motion information, and determine whether the quantity of sixth-type auxiliary code blocks is greater than the quantity threshold. If the quantity is greater than the quantity threshold, the sixth condition parameter meets the sixth filtering condition. If the quantity is less than or equal to the quantity threshold, the sixth condition parameter does not meet the sixth filtering condition.

In an embodiment, when the sixth condition parameter is the area of the sixth-type auxiliary code block, the sixth filtering condition is that the ratio of the area of the sixth-type auxiliary code block to the area sum of all the auxiliary code blocks is greater than the area ratio threshold. A manner of determining whether the sixth condition parameter meets the sixth filtering condition may be: The computer device may determine the sixth-type auxiliary code block according to the picture search range information indicated by the reference motion information, and calculate the area of the sixth-type auxiliary code block. Then, the ratio between the area of the sixth-type auxiliary code block and the area sum of all the auxiliary code blocks is calculated, and it is determined whether the ratio is greater than the area ratio threshold; and if the ratio is greater than the area ratio threshold, it is determined that the sixth condition parameter meets the sixth filtering condition; or if the ratio is less than or equal to the area ratio threshold, it is determined that the sixth condition parameter does not meet the sixth filtering condition.

In an embodiment, if the fifth condition parameter meets the fifth filtering condition, a manner of determining the reference search picture in the M reference picture lists as the target reference picture search range of the target code block may be as follows: If the fifth condition parameter meets the fifth filtering condition, determining the reference search picture in the M reference picture lists as the candidate reference picture search range, where the candidate reference picture search range includes the reference search picture and the reference picture list to which the reference search picture belongs, and then the computer device may determine a seventh parameter according to the picture search range information indicated by the reference motion information, where the seventh parameter may include: at least one of a quantity of seventh-type auxiliary code blocks and an area of the seventh type of auxiliary code block, where the seventh-type auxiliary code block is a code block that performs reference picture search on a second reference picture list in a candidate reference picture search range, and the seventh-type auxiliary code block belongs to the auxiliary code blocks of the target code block. Then, it is determined whether the seventh condition parameter meets a seventh filtering condition; and if it is determined that the seventh condition parameter meets the seventh filtering condition, the second reference picture list and the reference search picture in the second reference picture list are determined as the target reference picture search range of the target code block; or if it is determined that the seventh condition parameter does not meet the seventh filtering condition, the second reference picture list and the reference search picture in the second reference picture list are not determined as the target reference picture search range of the target code block, that is, when reference picture search is performed, search for the second reference picture list is skipped. The seventh filtering condition may include at least one of the following: The quantity of seventh-type auxiliary code blocks is greater than the quantity threshold, and the ratio of the area of the seventh-type auxiliary code block to the area sum of all auxiliary code blocks is greater than the area ratio threshold. The quantity threshold and the area ratio threshold may be determined according to at least one of a temporal layer at which the to-be-coded video frame is located or a target code block size.

The higher the temporal layer, the smaller the quantity threshold and the area ratio threshold. A larger size of the target code block results in a smaller quantity threshold and area ratio threshold. For a manner of determining whether the seventh condition parameter meets the seventh filtering condition and a manner of obtaining the quantity threshold and the area ratio threshold, references may be made to the foregoing corresponding embodiments, and details are not described herein again.

In an embodiment, if the fifth condition parameter does not meet the fifth filtering condition, feature information of the target code block is obtained, where the feature information includes the temporal layer at which the to-be-coded video frame is located; and the feature information includes the temporal layer at which the to-be-coded video frame is located and the size of the target code block; or if the feature information of the target code block meets a trigger condition, obtaining the reference motion information of the auxiliary code block of the target code block is triggered; or if the feature information of the target code block does not meet the trigger condition, at least the first reference picture list and the second reference picture list in the M reference picture lists are determined as the target reference picture search range of the target code block.

S104: Perform motion estimation on the target code block according to the target reference picture search range.

The target reference picture search range includes a target reference picture list and a target reference picture corresponding to the target reference picture list.

In an example, the computer device may perform motion estimation according to the target reference picture search range and by using a first reference picture search rule to obtain a first motion estimation parameter of the target code block, perform motion estimation according to the target reference picture search range and by using a second reference picture search rule to obtain a second motion estimation parameter of the target code block, and determine an optimal motion estimation parameter as a target motion estimation parameter of the target code block from the first motion estimation parameter and the second motion estimation parameter. The first reference picture search rule may be a translation motion estimation (ME) model, and the second reference picture search rule may be an affine ME model. The determining, by the computer device from the first motion estimation parameter and the second motion estimation parameter, the optimal motion estimation parameter as the target motion estimation parameter of the target code block may be: determining a motion estimation parameter corresponding to minimum rate distortion (RD) as the optimal motion estimation parameter, and using the optimal motion estimation parameter as the target motion estimation parameter of the target code block. Compared with a VVC test model (VTM), a predefined search template and rule are used for reducing a quantity of RD calculation times in a motion estimation process. In this embodiment of the present disclosure, by using the target reference picture search range obtained in step S103, the quantity of RD calculation times in the motion estimation process can be reduced, so that motion estimation of the target code block is accelerated, and accuracy of obtaining the target motion estimation parameter of the target code block based on the target reference picture search range can be ensured relatively accurately.

In this example of the present disclosure, a to-be-coded video frame is obtained, and a to-be-coded target code block is determined from the to-be-coded video frame. Reference motion information of an auxiliary code block of the target code block is obtained. A target reference picture search range for the target code block is determined from M reference picture lists according to picture search range information indicated by the reference motion information, where M is an integer greater than 1; and motion estimation is performed on the target code block according to the target reference picture search range. The reference motion information of the auxiliary code block is used for reducing a quantity of reference picture lists or reference pictures for searching for the target code block, skipping searching for some reference picture lists or some reference pictures during motion estimation, reducing a calculation amount, reducing time complexity of motion estimation, and improving motion estimation efficiency of a video frame coding process.

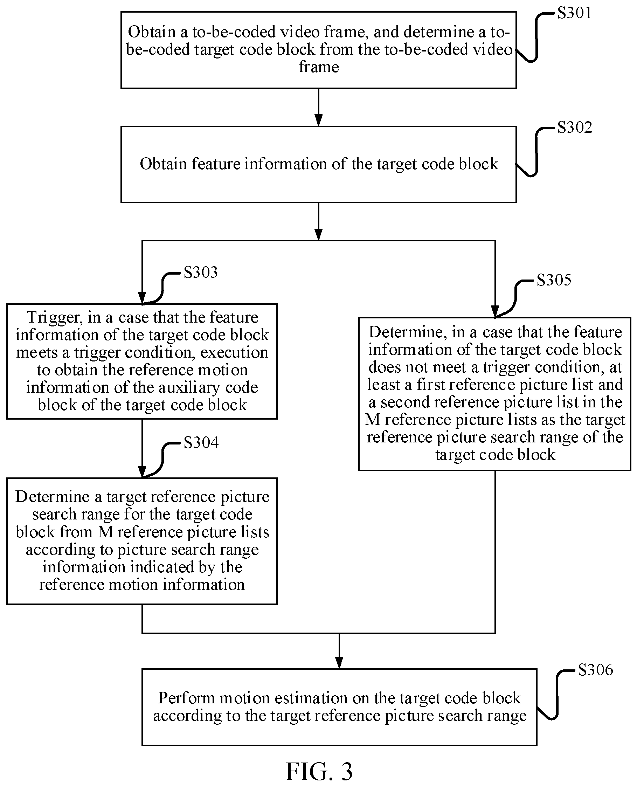

Based on the foregoing motion estimation solution in the coding process, referring to FIG. 3, FIG. 3 is a schematic flowchart of a motion estimation method in a coding process according to an embodiment of the present disclosure. The motion estimation method in a coding process may be performed by a computer device, and the computer device may be a terminal device or a server. In actual application, the motion estimation method in a coding process may be performed by a coder in a computer device. The terminal device may be a smartphone, a tablet computer, a notebook computer, a desktop computer, an intelligent voice interaction device, a smart home appliance, an in-vehicle terminal, an aircraft, or the like. The server may be an independent physical server, or may be a server cluster or a distributed system formed by multiple physical servers, or may be a cloud server that provides basic cloud computing service such as a cloud service, a cloud database, cloud computing, a cloud function, cloud storage, a network service, cloud communication, a middleware service, a domain name service, a security service, a content distribution network (CDN), big data, and an artificial intelligence platform. The motion estimation method in a coding process described in this embodiment includes the following steps S301-S306.

S301: Obtain a to-be-coded video frame, and determine a to-be-coded target code block from the to-be-coded video frame.

S302: Obtain feature information of the target code block.

Herein, the feature information includes a temporal layer at which the to-be-coded video frame is located, or the feature information includes a temporal layer at which the to-be-coded video frame is located and a size of the target code block. The temporal layer may be a temporal layer 0, a temporal layer 1, a temporal layer 2, a temporal layer 3, a temporal layer 4, a temporal layer 5, or the like, and the size of the target code block may be 256, 128, 64, 32, or the like.

In an example for an important video frame or to prevent a problem that a target motion estimation parameter cannot be updated, a trigger condition may be predefined. The computer device may determine whether the obtained feature information of the target code block meets the trigger condition. The trigger condition is used for triggering obtaining of reference motion information of an auxiliary code block of the target code block. If it is determined that the feature information of the target code block meets the trigger condition, fast motion estimation may be performed on the target code block in this case, and step S303 is performed. If it is determined that the feature information of the target code block does not meet the trigger condition, it indicates that the video frame is an important video frame. In this case, a target reference picture search range cannot be determined from M reference picture lists for the target code block according to the picture search range information indicated by the reference motion information to perform fast motion estimation on the target code block, and the computer device performs step S305.

In an example when the feature information of the target code block includes the temporal layer at which the to-be-coded video frame is located, the trigger condition may be that the temporal layer at which the to-be-coded video frame is located is greater than a temporal layer threshold, that is, fast motion estimation is disabled on a code block included in a video frame at a low temporal layer, so as to ensure coding efficiency. The computer device may determine whether the temporal layer at which the to-be-coded video frame is located included in the feature information of the target code block is greater than the temporal layer threshold. If it is determined that the temporal layer at which the to-be-coded video frame is located is greater than the temporal layer threshold, fast motion estimation may be performed on the target code block in this case, that is, step S303 is performed. If it is determined that the temporal layer at which the to-be-coded video frame is located is less than or equal to the temporal layer threshold, it means that the to-be-coded video frame is a key frame, and fast motion estimation cannot be performed on the target code block, and in this case, step S305 may be performed.

In an example when the feature information of the target code block includes the temporal layer at which the to-be-coded video frame is located and the size of the target code block, the trigger condition may include a predefined code block size corresponding to each temporal layer. For example, in a random access (RA) configuration, a predefined code block size corresponding to the temporal layer 0 is 256, a predefined code block size corresponding to the temporal layer 1 is 128, a predefined code block size corresponding to the temporal layer 2 is 128, a predefined code block size corresponding to the temporal layer 3 is 64, a predefined code block size corresponding to the temporal layer 4 is 64, and a predefined code block size corresponding to the temporal layer 5 is 32. The predefined code block size corresponding to each temporal layer in the present disclosure may be set according to a requirement, and is not limited to the predefined code block size corresponding to each temporal layer in the foregoing example. Then, a process in which the computer device may determine whether the feature information of the target code block meets the trigger condition is: The computer device determines, according to the temporal layer at which the to-be-coded video frame is located, the predefined code block size corresponding to the temporal layer at which the to-be-coded video frame is located from the predefined code block size corresponding to each temporal layer. Then it is determined whether the size of the target code block is greater than a target predefined code block size. If it is determined that the size of the target code block is greater than the target predefined code block size, fast motion estimation may be performed on the target code block, and step S303 is performed. If it is determined that the size of the target code block is less than or equal to the target predefined code block size, fast motion estimation cannot be performed on the target code block, and step S305 is performed.

For example, the temporal layer at which the to-be-coded video frame is located is 0, and the size of the target code block is 256. The computer device may determine, based on the temporal layer 0 at which the to-be-coded video frame is located, that a predefined code block size corresponding to the temporal layer 0 is 128 from the predefined code block size corresponding to each temporal layer. Then the computer device determines that the size of the target code block is greater than the predefined code block size (that is, 256 is greater than 128), and may perform fast motion estimation on the target code block. For another example, a temporal layer at which the to-be-coded video frame is located is 0, and the size of the target code block is 64. The computer device determines that the size of the target code block is less than the predefined code block size (that is, 64 is less than 128), and cannot perform fast motion estimation on the target code block. At least a first reference picture list and a second reference picture list in the M reference picture lists may be used as the target reference picture search range.

S303: Trigger, in a case that the feature information of the target code block meets a trigger condition, execution to obtain the reference motion information of the auxiliary code block of the target code block.

S304: Determine a target reference picture search range for the target code block from M reference picture lists according to picture search range information indicated by the reference motion information.

Herein, M is an integer greater than 1.

For an implementation of step S304, refer to the implementation of the corresponding part in FIG. 1. Details are not described herein again.

S305: Determine, in a case that the feature information of the target code block does not meet a trigger condition, at least a first reference picture list and a second reference picture list in the M reference picture lists as the target reference picture search range of the target code block.

The first reference picture list may be a forward reference picture list, and the second reference picture list may be a backward reference picture list.

In an example, when the M reference picture lists include the first reference picture list and the second reference picture list, if it is determined that the feature information of the target code block does not meet the trigger condition, both the first reference picture list and the second reference picture list are used as the target reference picture search range.

In another example, when the M reference picture lists include the first reference picture list, the second reference picture list, and a bidirectional reference picture list, if it is determined that the feature information of the target code block does not meet the trigger condition, the first reference picture list and the first reference picture list may be used as the target reference picture search range, or if it is determined that the feature information of the target code block does not meet the trigger condition, the first reference picture list, the first reference picture list, and the bidirectional reference picture list may be used as the target reference picture search range.

S306: Perform motion estimation on the target code block according to the target reference picture search range.

In an example, for a procedure of performing motion estimation on the target code block according to the target reference picture search range, references may be made to the implementation of step S104. The computer device determines a target reference picture corresponding to the target reference picture search range and a target reference picture corresponding to the target reference picture list, where a quantity of target reference pictures may be one or more; then performs motion estimation according to the target reference picture list and the target reference picture corresponding to the target reference picture list and by using a first reference picture search rule, to obtain a first motion estimation parameter of the target code block; performs motion estimation according to the target reference picture list and the target reference picture corresponding to the target reference picture list and by using a second reference picture search rule, to obtain a second motion estimation parameter of the target code block, where the second reference picture search rule is different from the first reference picture search rule; and selects a target motion estimation parameter for the target code block from the first motion estimation parameter and the second motion estimation parameter.

Each target reference picture includes one or more code blocks, and an implementation in which motion estimation is performed according to the target reference picture list and the target reference picture corresponding to the target reference picture list by using the first reference picture search rule to obtain the first motion estimation parameter of the target code block may be: traversing, by using the first reference picture search rule, the target reference picture in the target reference picture list, then determining, by using a rate distortion (RD) cost as a criterion, a first matching block with lowest rate distortion from code blocks included in the target reference picture corresponding to the target reference picture list, and determining a motion parameter corresponding to the first matching block with the lowest rate distortion as the first motion estimation parameter of the target code block. Similarly, an implementation in which motion estimation is performed according to the target reference picture list and the target reference picture corresponding to the target reference picture list by using the second reference picture search rule to obtain the second motion estimation parameter of the target code block may be: traversing, by using the second reference picture search rule, the target reference picture in the target reference picture list, determining, by using the rate distortion (RD) cost as a criterion, a second matching block with minimum rate distortion from the code blocks included in the target reference picture corresponding to the target reference picture list, and determining a motion estimation parameter corresponding to the second matching block as the second motion estimation parameter of the target code block. The second reference picture search rule is a solution rule of a gradient descent method, a loss function of the second reference picture search rule is a minimum mean square error (MSE) of a code block before and after motion estimation, and an initial motion estimation parameter of the second reference picture search rule is determined by a motion estimation parameter of the first reference picture search rule.

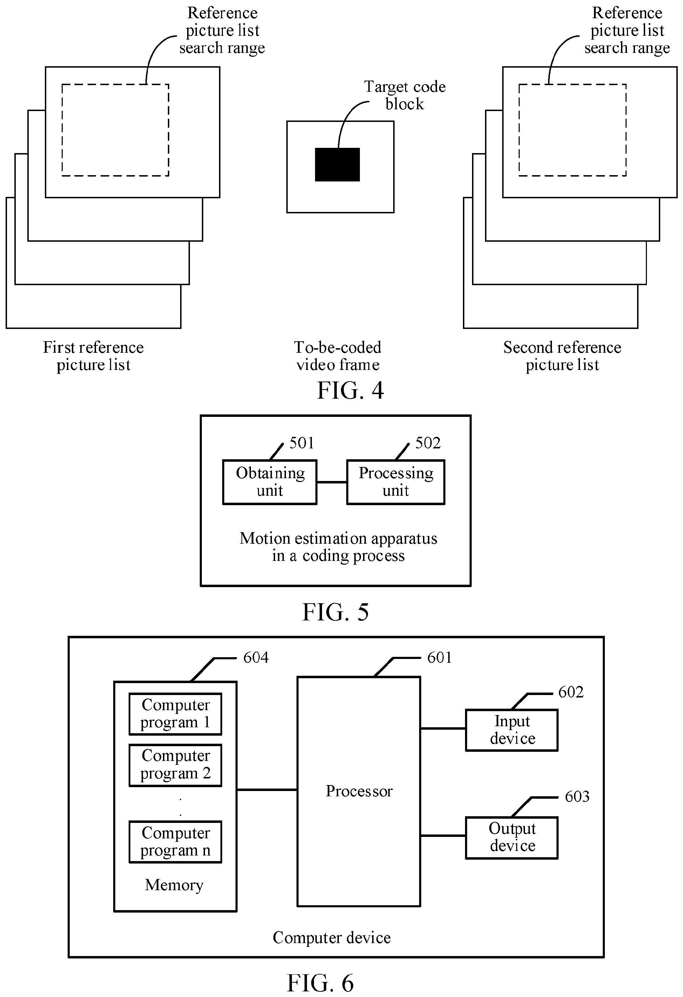

In an example, when the target reference picture search range includes at least the first reference picture list and the second reference picture list in the M reference picture lists, referring to FIG. 4, FIG. 4 is a schematic diagram of performing motion estimation on a target code block by using a first reference picture search rule. An implementation in which the computer device performs motion estimation according to the target reference picture list and the target reference picture corresponding to the target reference picture list by using the first reference picture search rule to obtain the first motion estimation parameter of the target code block may be: traversing all reference pictures in the first reference picture list and the second reference picture list according to the first reference picture search rule, separately determining, with the rate distortion cost as a criterion, a first matching block with minimum rate distortion from the code blocks included in the target reference picture corresponding to the first reference picture list, and determining a second matching block with minimum rate distortion from the code blocks included in the target reference picture corresponding to the second reference picture list, then performing weighted summation processing on the first matching block and the second matching block to obtain a bidirectional matching block, and then determining a motion estimation parameter corresponding to the matching block with the minimum rate distortion from a motion estimation parameter corresponding to the first matching block, a motion estimation parameter corresponding to the second matching block, and a motion estimation parameter corresponding to the bidirectional matching block and using it as the first motion estimation parameter of the target code block.

In an example, to select the optimal motion estimation parameter as the target motion estimation parameter of the target code block, the rate distortion corresponding to the first motion estimation parameter and the rate distortion corresponding to the second motion estimation parameter may be compared, so as to select the optimal motion estimation parameter. An implementation of selecting the target motion estimation parameter for the target code block from the first motion estimation parameter and the second motion estimation parameter may be: obtaining the first rate distortion corresponding to the first motion estimation parameter and the second rate distortion corresponding to the second motion estimation parameter; and then comparing the first rate distortion and the second rate distortion, and if it is determined that the first rate distortion is greater than the second rate distortion, determining the second motion estimation parameter corresponding to the second rate distortion as the target motion estimation parameter of the target code block; or if it is determined that the second rate distortion is greater than the first rate distortion, determining the first motion estimation parameter corresponding to the first rate distortion as the target motion estimation parameter of the target code block. If it is determined that the first rate distortion and the second rate distortion are the same, both the first motion estimation parameter and the second motion estimation parameter may be determined as the target motion estimation parameter of the target code block. In some embodiments, if it is determined that the first rate distortion and the second rate distortion are the same, the first motion estimation parameter or the second motion estimation parameter may be determined as the target motion estimation parameter of the target code block.

In this example of the present disclosure, on one hand, the computer device may obtain a to-be-coded video frame, and determine a to-be-coded target code block from the to-be-coded video frame; and obtain feature information of the target code block, where the feature information includes a temporal layer at which the to-be-coded video frame is located, or the feature information includes a temporal layer at which the to-be-coded video frame is located and a size of the target code block. A trigger condition may be set to control whether fast motion estimation is performed on the target code block, so as to prevent motion estimation from being performed on each code block in a video frame coding process by using the same reference picture list or the same reference picture, and falling within a local optimum. On the other hand, if feature information of the target code block meets the trigger condition, the target code block is triggered to obtain reference motion information of an auxiliary code block of the target code block. A target reference picture search range for the target code block is determined from M reference picture lists according to picture search range information indicated by the reference motion information; or if the feature information of the target code block does not meet the trigger condition, at least a first reference picture list and a second reference picture list in the M reference picture lists are used as the target reference picture search range of the target code block, and motion estimation is performed on the target code block according to the target reference picture search range. When the feature information of the target code block meets the trigger condition, fast motion estimation may be performed on the target code block. By determining the target reference picture search range, a calculation amount may be reduced, motion estimation of the target code block is improved, and coding efficiency is improved.

Based on the description of the foregoing embodiment of the motion estimation method in a coding process, an embodiment of the present disclosure further discloses a motion estimation apparatus in a coding process. The motion estimation apparatus in a coding process may be a computer program (including program code) running on the foregoing computer device. The motion estimation apparatus in a coding process may perform the methods shown in FIG. 1 and FIG. 3. Referring to FIG. 5, the motion estimation apparatus in a coding process may include the following units:
an obtaining unit 501, configured to obtain a to-be-coded video frame, and determine a to-be-coded target code block from the to-be-coded video frame;
the obtaining unit 501 being further configured to: obtain reference motion information of an auxiliary code block of the target code block, the reference motion information of the auxiliary code block including: motion information of N adjacent code blocks adjacent to the target code block and motion information included in a reference code block list, and N being an integer greater than or equal to 1; and
a processing unit 502, configured to determine a target reference picture search range for the target code block from M reference picture lists according to picture search range information indicated by the reference motion information, M being an integer greater than 1;
the processing unit 502 being configured to perform motion estimation on the target code block according to the target reference picture search range.

In an embodiment, the processing unit 502 is further configured to:
determine a first condition parameter according to the picture search range information indicated by the reference motion information of the auxiliary code block; the first condition parameter including at least one of the following: a quantity of first-type auxiliary code blocks and an area of a first-type auxiliary code block; and the first-type auxiliary code block being a code block that performs reference picture search on a first reference picture list in the M reference picture lists, the first-type auxiliary code block belonging to auxiliary code blocks of the target code block, and the first reference picture list being a forward reference list; and
determine, in a case that the first condition parameter meets a first filtering condition, the first reference picture list as the target reference picture search range of the target code block.

In an embodiment, the processing unit 502 is further configured to:
determine a second condition parameter according to the picture search range information indicated by the reference motion information of the auxiliary code block; the second condition parameter including at least one of the following: a quantity of second-type auxiliary code blocks and an area of a second-type auxiliary code block; and the second-type auxiliary code block being a code block that performs reference picture search on a second reference picture list in the M reference picture lists, the second-type auxiliary code block belonging to auxiliary code blocks of the target code block, and the second reference picture list being a backward reference list; and
determine, in a case that the second condition parameter meets a second filtering condition, the second reference picture list as the target reference picture search range of the target code block.

In an embodiment, the processing unit 502 is further configured to:
before determining the second condition parameter according to the picture search range information indicated by the reference motion information of the auxiliary code block, obtain a first condition parameter and a first filtering condition, and determine whether the first condition parameter meets the first filtering condition; and
determine, in a case that the first condition parameter does not meet the first filtering condition, the second condition parameter according to the picture search range information indicated by the reference motion information of the auxiliary code block;
the first condition parameter including at least one of the following: a quantity of first-type auxiliary code blocks and an area of a first-type auxiliary code block; and the first-type auxiliary code block being a code block that performs reference picture search on a first reference picture list in the M reference picture lists, the first-type auxiliary code block belonging to auxiliary code blocks of the target code block, and the first reference picture list being a forward reference list.

In an embodiment, the processing unit 502 is further configured to:
determine, in a case that the first condition parameter meets the first filtering condition, a third condition parameter according to a reference picture corresponding to the reference motion information of the auxiliary code block; the third condition parameter including at least one of the following: a quantity of third-type auxiliary code blocks and an area of a third-type auxiliary code block; and the third-type auxiliary code block being a code block that performs reference picture search on a target reference picture in the first reference picture list, and the third-type auxiliary code block belonging to the auxiliary code blocks of the target code block; and
determine, in a case that the third condition parameter meets a third filtering condition, the target reference picture in the first reference picture list as the target reference picture search range of the target code block.

In an embodiment, the processing unit 502 is further configured to:
determine, in a case that the second condition parameter meets the second filtering condition, a fourth condition parameter according to a reference picture corresponding to the reference motion information of the auxiliary code block; the fourth condition parameter including at least one of the following: a quantity of fourth-type auxiliary code blocks and an area of a fourth-type auxiliary code block; and the fourth-type auxiliary code block being a code block that performs reference picture search on a target reference picture in the second reference picture list, and the fourth-type auxiliary code block belonging to the auxiliary code blocks of the target code block; and
determine, in a case that the fourth condition parameter meets a fourth filtering condition, the target reference picture in the second reference picture list as the target reference picture search range of the target code block.

In an example, the processing unit 502 is further configured to:
determine a fifth condition parameter according to the picture search range information indicated by the reference motion information; the fifth condition parameter including at least one of the following: a quantity of fifth-type auxiliary code blocks and an area of a fifth-type auxiliary code block; and the fifth-type auxiliary code block being a code block that performs reference picture search on reference search pictures in the M reference picture lists, and the fifth-type auxiliary code block belonging to auxiliary code blocks of the target code block; and
determine, in a case that the fifth condition parameter meets a fifth filtering condition, the reference search pictures as the target reference picture search range of the target code block.

In an example, the obtaining unit 501 is further configured to: before obtaining the reference motion information of the auxiliary code block of the target code block, obtain feature information of the target code block, the feature information including a temporal layer at which the to-be-coded video frame is located, or the feature information including a temporal layer at which the to-be-coded video frame is located and a size of the target code block; and
the processing unit 502 is further configured to: trigger, in a case that the feature information of the target code block meets a trigger condition, execution to obtain the reference motion information of the auxiliary code block of the target code block; or
use, in a case that the feature information of the target code block does not meet a trigger condition, at least a first reference picture list and a second reference picture list in the M reference picture lists as the target reference picture search range of the target code block.

In an embodiment, the processing unit 502 is further configured to:
determine a target reference picture list corresponding to the target reference picture search range and a target reference picture corresponding to the target reference picture list;
perform motion estimation according to the target reference picture list and the target reference picture corresponding to the target reference picture list and by using a first reference picture search rule, to obtain a first motion estimation parameter of the target code block;
perform motion estimation according to the target reference picture list and the target reference picture corresponding to the target reference picture list and by using a second reference picture search rule, to obtain a second motion estimation parameter of the target code block, the second reference picture search rule being different from the first reference picture search rule; and
select a target motion estimation parameter of the target code block from the first motion estimation parameter and the second motion estimation parameter.

In an example, the obtaining unit 501 is further configured to: obtain first rate distortion corresponding to the first motion estimation parameter and second rate distortion corresponding to the second motion estimation parameter; and determine, in a case that the first rate distortion is greater than the second rate distortion, the second motion estimation parameter corresponding to the second rate distortion as the target motion estimation parameter of the target code block; or determine, in a case that the second rate distortion is greater than the first rate distortion, the first motion estimation parameter corresponding to the first rate distortion as the target motion estimation parameter of the target code block.

According to an embodiment of the present disclosure, steps involved in the methods shown in FIG. 1 and FIG. 3 may be performed by units in the motion estimation apparatus in a coding process shown in FIG. 5. For example, step S101 and step S102 shown in FIG. 1 are performed by the obtaining unit 501 shown in FIG. 5, and step S103 and step S104 are performed by the processing unit 502 shown in FIG. 5. For another example, step S301 and step S302 shown in FIG. 3 are performed by the obtaining unit 501 shown in FIG. 5, and step S303 to step S306 are performed by the processing unit 502 shown in FIG. 5.

According to another example of the present disclosure, units of the motion estimation apparatus in a coding process shown in FIG. 5 may be separately or wholly combined into one or several other units, or one (or more) of the units herein may further be divided into multiple units of smaller functions. In this way, the same operations can be implemented, and implementation of the technical effects of the embodiments of the present disclosure is not affected. The foregoing units are divided based on logical functions. In an actual application, a function of one unit may be implemented by multiple units, or functions of multiple units are implemented by one unit. In another embodiment of the present disclosure, the motion estimation apparatus in a coding process may also include another unit. In actual application, these functions may also be implemented by another unit, and may be implemented by multiple units in cooperation.

According to another example of the present disclosure, processing elements and storage elements such as a central processing unit (CPU), a random access memory (RAM), and a read only memory (ROM) may be included. For example, a computer program (including program code) that can execute steps involved in the corresponding methods shown in FIG. 1 and FIG. 3 is run on a general computing device of a computer, so as to construct the motion estimation apparatus in a coding process shown in FIG. 5, and implement the motion estimation method in a coding process according to the embodiment of the present disclosure. The computer program may be recorded in, for example, a computer readable recording medium, and may be loaded into the foregoing computing device by using the computer readable recording medium, and run in the computer device.

In this example of the present disclosure, a to-be-coded video frame is obtained, and a to-be-coded target code block is determined from the to-be-coded video frame. Reference motion information of an auxiliary code block of the target code block is obtained. A target reference picture search range for the target code block is determined from M reference picture lists according to picture search range information indicated by the reference motion information, where M is an integer greater than 1; and motion estimation is performed on the target code block according to the target reference picture search range. The reference motion information of the auxiliary code block is used for reducing a quantity of reference picture lists or reference pictures for searching for the target code block, skipping searching for some reference picture lists or some reference pictures during motion estimation, reducing a calculation amount, reducing time complexity of motion estimation, and improving motion estimation efficiency of a video frame coding process.

Based on the foregoing description of an embodiment of a motion estimation method in a coding process, an embodiment of the present disclosure further discloses a computer device. Referring to FIG. 6, the computer device may include at least a processor 601, an input device 602, an output device 603, and a memory 604. The processor 601, the input device 602, the output device 603, and the memory 604 in the computer device may be connected by using a bus or in another manner.

The memory 604 is a memory device in the computer device, and is configured to store a program and data. It may be understood that the memory 604 herein may include a built-in storage medium of the computer device, and certainly may also include an extended storage medium supported by the computer device. The memory 604 provides a storage space, and the storage space stores an operating system of the computer device. In addition, a computer program (including program code) is further stored in the storage space. The computer storage medium herein may be a high-speed RAM memory, or may be at least one computer storage medium far from the foregoing processor. The processor may be referred to as a central processing unit (CPU), is a core and a control center of the computer device, and is configured to run the computer program stored in the memory 604.

In an example, the processor 601 may load and execute the computer program stored in the memory 604, so as to implement corresponding steps of the method in the foregoing embodiment of the motion estimation method in a coding process. For example, the processor 601 loads and executes the computer program stored in the memory 604, and is configured to:
obtain a to-be-coded video frame, and determine a to-be-coded target code block from the to-be-coded video frame;
obtain reference motion information of an auxiliary code block of the target code block, the reference motion information of the auxiliary code block including: motion information of N adjacent code blocks adjacent to the target code block and motion information included in a reference code block list, and N being an integer greater than or equal to 1;
determine a target reference picture search range for the target code block from M reference picture lists according to picture search range information indicated by the reference motion information, M being an integer greater than 1; and
perform motion estimation on the target code block according to the target reference picture search range.

It is to be understood that in this embodiment of the present disclosure, the processor 601 may be a central processing unit (CPU), and the processor 601 may be another general purpose processor, a digital signal processor (DSP), an application specific integrated circuit (ASIC), a field-programmable gate array (FPGA) or another programmable logic device, a discrete gate or transistor logic device, a discrete hardware component, or the like. The general purpose processor may be a microprocessor, or the processor may be any conventional processor.

An embodiment of the present disclosure provides a computer readable storage medium, where the computer readable storage medium stores a computer program, the computer program includes program instructions, and when the program instructions are executed by a processor, the motion estimation method in a coding process provided in the foregoing embodiment may be performed.

An embodiment of the present disclosure further provides a computer program product. The computer program product includes computer instructions. The computer instructions are stored in a computer readable storage medium. When being executed by a processor of a computer device, the computer instructions perform the motion estimation method in a coding process provided in the foregoing embodiment.

A person of ordinary skill in the art is to understand that all or a part of the processes of the method in the foregoing embodiment may be implemented by a program instructing relevant hardware. The program may be stored in a computer readable storage medium. When the program is run, the processes of the method in the foregoing embodiment are performed. The foregoing storage medium may include a magnetic disc, an optical disc, a read-only memory (ROM), a random access memory (RAM), or the like.

## Claims

1. A motion estimation method in a coding process, wherein the method comprises:
obtaining a to-be-coded video frame, and determining a to-be-coded target code block from the to-be-coded video frame (S101);
obtaining reference motion information of an auxiliary code block of the target code block (S102), the reference motion information of the auxiliary code block comprising: motion information of N adjacent code blocks adjacent to the target code block and motion information comprised in a reference code block list, and N being an integer greater than or equal to 1;
determining a target reference picture search range for the target code block from M reference picture lists according to picture search range information indicated by the reference motion information (S103), M being an integer greater than 1; and
performing motion estimation on the target code block according to the target reference picture search range (S104),
**characterized in that**
the determining a target reference picture search range for the target code block from M reference picture lists according to picture search range information indicated by the reference motion information (S103) comprises:
determining a first condition parameter according to the picture search range information indicated by the reference motion information of the auxiliary code block;
the first condition parameter comprising an area of one or more first-type auxiliary code blocks; and the one or more first-type auxiliary code blocks being a code block for performing reference picture search on a first reference picture list in the M reference picture lists, the one or more first-type auxiliary code blocks belonging to auxiliary code blocks of the target code block, and the first reference picture list being a forward reference list; and
determining, in a case that the first condition parameter meets a first filtering condition, the first reference picture list as the target reference picture search range of the target code block,
wherein the first filtering condition includes a ratio of the area of the one or more first-type auxiliary code blocks to an area sum of all auxiliary code blocks is greater than an area ratio threshold,
wherein if there are multiple first-type auxiliary code blocks, the area of the one or more first-type auxiliary code blocks refers to a sum of areas of all first-type auxiliary code blocks.

2. The method according to claim 1, wherein the determining a target reference picture search range for the target code block from M reference picture lists according to picture search range information indicated by the reference motion information (S103) comprises:
determining a second condition parameter according to the picture search range information indicated by the reference motion information of the auxiliary code block;
the second condition parameter comprising at least one of the following: a quantity of second-type auxiliary code blocks and an area of a second-type auxiliary code block; wherein the second-type auxiliary code block is a code block configured to perform reference picture search on a second reference picture list in the M reference picture lists, the second reference picture list being a backward reference list, and the second-type auxiliary code block belongs to auxiliary code blocks of the target code block;
determining, in a case that the second condition parameter meets a second filtering condition, the second reference picture list as the target reference picture search range of the target code block; and
wherein the second filtering includes a ratio of an area of the second-type auxiliary code blocks to an area sum of all auxiliary code blocks being greater than an area ratio threshold.

3. The method according to claim 2, wherein the determining a second condition parameter according to the picture search range information indicated by the reference motion information of the auxiliary code block comprises:
obtaining a first condition parameter and a first filtering condition; and
determining, in a case that the first condition parameter does not meet the first filtering condition, the second condition parameter according to the picture search range information indicated by the reference motion information of the auxiliary code block;
the first condition parameter comprising at least one of the following: a quantity of first-type auxiliary code blocks and an area of a first-type auxiliary code block; and the one or more first-type auxiliary code blocks is a code block configured to perform reference picture search on a first reference picture list in the M reference picture lists, the first reference picture list being a forward reference list, and the second-type auxiliary code block belongs to auxiliary code blocks of the target code block; and
wherein the first filtering condition includes a ratio of an area of the first-type auxiliary code blocks to an area sum of all auxiliary code blocks being greater than an area ratio threshold.

4. The method according to claim 1, wherein the determining, in a case that the first condition parameter meets a first filtering condition, the first reference picture list as the target reference picture search range of the target code block comprises:
determining, in a case that the first condition parameter meets the first filtering condition, a third condition parameter according to a reference picture corresponding to the reference motion information of the auxiliary code block;
the third condition parameter comprising at least one of the following: a quantity of third-type auxiliary code blocks and an area of a third-type auxiliary code block; wherein the third-type auxiliary code block is a code block configured to perform reference picture search on a target reference picture in the first reference picture list, and the third-type auxiliary code block belongs to the auxiliary code blocks of the target code block; determining, in a case that the third condition parameter meets a third filtering condition, the target reference picture in the first reference picture list as the target reference picture search range of the target code block; and
wherein the third filtering includes a ratio of an area of the third-type auxiliary code blocks to an area sum of all auxiliary code blocks being greater than an area ratio threshold.

5. The method according to claim 2, wherein the determining, in a case that the second condition parameter meets a second filtering condition, the second reference picture list as the target reference picture search range of the target code block comprises:
determining, in a case that the second condition parameter meets the second filtering condition, a fourth condition parameter according to a reference picture corresponding to the reference motion information of the auxiliary code block;
the fourth condition parameter comprising at least one of the following: a quantity of fourth-type auxiliary code blocks and an area of a fourth-type auxiliary code block; wherein the fourth-type auxiliary code block is a code block configured to perform reference picture search on a target reference picture in the second reference picture list, and the fourth-type auxiliary code block belongs to the auxiliary code blocks of the target code block;
determining, in a case that the fourth condition parameter meets a fourth filtering condition, the target reference picture in the second reference picture list as the target reference picture search range of the target code block; and
wherein the fourth filtering condition includes a ratio of an area of the fourth-type auxiliary code blocks to an area sum of all auxiliary code blocks being greater than an area ratio threshold.

6. The method according to claim 1, wherein the determining a target reference picture search range for the target code block from M reference picture lists according to picture search range information indicated by the reference motion information (S103) comprises:
determining a fifth condition parameter according to the picture search range information indicated by the reference motion information;
the fifth condition parameter comprising at least one of the following: a quantity of fifth -type auxiliary code blocks and an area of a fifth-type auxiliary code block; wherein the fifth-type auxiliary code block is a code block configured to perform reference picture search on reference search pictures in the M reference picture lists, and the fifth-type auxiliary code block belongs to auxiliary code blocks of the target code block; determining, in a case that the fifth condition parameter meets a fifth filtering condition, the reference search pictures as the target reference picture search range of the target code block and;
wherein the fifth filtering condition includes a ratio of an area of the fifth-type auxiliary code blocks to an area sum of all auxiliary code blocks being greater than an area ratio threshold.

7. A motion estimation apparatus in a coding process, wherein the apparatus comprises:
an obtaining unit (501), configured to obtain a to-be-coded video frame, and determine a to-be-coded target code block from the to-be-coded video frame;
the obtaining unit (501) being further configured to: obtain reference motion information of an auxiliary code block of the target code block, the reference motion information of the auxiliary code block comprising: motion information of N adjacent code blocks adjacent to the target code block and motion information comprised in a reference code block list, and N being an integer greater than or equal to 1; and
a processing unit (502), configured to determine a target reference picture search range for the target code block from M reference picture lists according to picture search range information indicated by the reference motion information, M being an integer greater than 1;
the processing unit (502) being further configured to perform motion estimation on the target code block according to the target reference picture search range,
**characterized in that**
the determining of the target reference picture search range for the target code block from M reference picture lists according to picture search range information indicated by the reference motion information (S103) comprises:
determining a first condition parameter according to the picture search range information indicated by the reference motion information of the auxiliary code block;
the first condition parameter comprising an area of a first-type auxiliary code block; and the one or more first-type auxiliary code blocks being a code block for performing reference picture search on a first reference picture list in the M reference picture lists, the one or more first-type auxiliary code blocks belonging to auxiliary code blocks of the target code block, and the first reference picture list being a forward reference list; and
determining, in a case that the first condition parameter meets a first filtering condition, the first reference picture list as the target reference picture search range of the target code block,
wherein the first filtering condition includes a ratio of the area of the one or more first type auxiliary code blocks to an area sum of all auxiliary code blocks is greater than an area ratio threshold,
wherein if there are multiple first-type auxiliary code blocks, the area of the one or more first-type auxiliary code blocks refers to a sum of areas of all first-type auxiliary code blocks.

8. A computer device, comprising:
a memory (604), configured to store a computer program; and
a processor (601), configured to run the computer program stored in the memory (604) to implement the motion estimation method in a coding process according to any one of claims 1 to 7.

9. A computer storage medium, storing a computer program, when executed by a processor, implementing the motion estimation method in a coding process according to any one of claims 1 to 6.

10. A computer program product, comprising computer instructions, the computer instructions being stored in a computer readable storage medium, and a processor reading and executing the computer instructions from the computer readable storage medium, so as to implement the motion estimation method in a coding process according to any one of claims 1 to 6.

## Patentansprüche

1. Bewegungsschätzungsverfahren in einem Codiervorgang, wobei das Verfahren umfasst:
Erhalten eines zu codierenden Videobilds und Bestimmen eines zu codierenden Ziel-Codeblocks aus dem zu codierenden Videobild (S101);
Erhalten von Referenz-Bewegungsinformation eines Hilfs-Codeblocks des Ziel-Codeblocks (S102), wobei die Referenz-Bewegungsinformation des Hilfs-Codeblocks umfasst: Bewegungsinformation von N benachbarten Codeblöcken, die dem Ziel-Codeblock benachbart sind, und Bewegungsinformation, die in einer Referenz-Codeblock-Liste umfasst ist, und N eine ganze Zahl größer oder gleich 1 ist;
Bestimmen eines Ziel-Referenzbildsuchbereichs für den Ziel-Codeblock aus M Referenzbildlisten gemäß Bildsuchbereichsinformation, die durch die Referenz-Bewegungsinformation angegeben wird (S103), wobei M eine ganze Zahl größer als 1 ist; und
Durchführen von Bewegungsschätzung an dem Ziel-Codeblock gemäß dem Ziel-Referenzbildsuchbereich (S104),
**dadurch gekennzeichnet, dass** das Bestimmen eines Ziel-Referenzbildsuchbereichs für den Ziel-Codeblock aus M Referenzbildlisten gemäß Bildsuchbereichsinformation, die durch die Referenz-Bewegungsinformation angegeben wird (S103), umfasst:
Bestimmen eines ersten Bedingungsparameters gemäß der Bildsuchbereichsinformation, die durch die Referenz-Bewegungsinformation des Hilfs-Codeblocks angegeben wird;
wobei der erste Bedingungsparameter eine Fläche eines oder mehrerer Hilfs-Codeblöcke des ersten Typs umfasst; und wobei der eine oder die mehreren Hilfs-Codeblöcke des ersten Typs Codeblöcke sind, die dazu eingerichtet sind, eine Referenzbildsuche auf einer ersten Referenzbildliste in den M Referenzbildlisten durchzuführen, wobei die ein oder mehreren Hilfs-Codeblöcke des ersten Typs zu Hilfs-Codeblöcken des Ziel-Codeblocks gehören und die erste Referenzbildliste eine Vorwärtsreferenzliste ist; und
Bestimmen, in einem Fall, dass der erste Bedingungsparameter eine erste Filterbedingung erfüllt, die erste Referenzbildliste als den Ziel-Referenzbildsuchbereich des Ziel-Codeblocks,
wobei die erste Filterbedingung ein Verhältnis der Fläche des einen oder der mehreren Hilfs-Codeblöcke des ersten Typs zu einer Flächensumme aller Hilfs-Codeblöcke umfasst, das größer als ein Flächenverhältnisschwellenwert ist,
wobei, wenn es mehrere Hilfs-Codeblöcke des ersten Typs gibt, die Fläche des einen oder der mehreren Hilfs-Codeblöcke des ersten Typs eine Summe der Flächen aller Hilfs-Codeblöcke des ersten Typs bezeichnet.

2. Verfahren nach Anspruch 1, wobei das Bestimmen eines Ziel-Referenzbildsuchbereichs für den Ziel-Codeblock aus M Referenzbildlisten gemäß Bildsuchbereichsinformation, die durch die Referenz-Bewegungsinformation angegeben wird (S103), umfasst:
Bestimmen eines zweiten Bedingungsparameters gemäß der Bildsuchbereichsinformation, die durch die Referenz-Bewegungsinformation des Hilfs-Codeblocks angegeben wird;
wobei der zweite Bedingungsparameter mindestens eines der folgenden umfasst: eine Anzahl von Hilfs-Codeblöcken des zweiten Typs und eine Fläche eines Hilfs-Codeblocks des zweiten Typs; wobei der Hilfs-Codeblock des zweiten Typs ein Codeblock ist, der dazu eingerichtet ist, eine Referenzbildsuche auf einer zweiten Referenzbildliste in den M Referenzbildlisten durchzuführen, wobei die zweite Referenzbildliste eine Rückwärtsreferenzliste ist und der Hilfs-Codeblock des zweiten Typs zu Hilfs-Codeblöcken des Ziel-Codeblocks gehört;
Bestimmen, in einem Fall, dass der zweite Bedingungsparameter eine zweite Filterbedingung erfüllt, die zweite Referenzbildliste als den Ziel-Referenzbildsuchbereich des Ziel-Codeblocks; und
wobei die zweite Filterbedingung ein Verhältnis einer Fläche der Hilfs-Codeblöcke des zweiten Typs zu einer Flächensumme aller Hilfs-Codeblöcke umfasst, das größer als ein Flächenverhältnisschwellenwert ist.

3. Verfahren nach Anspruch 2, wobei das Bestimmen eines zweiten Bedingungsparameters gemäß der Bildsuchbereichsinformation, die durch die Referenz-Bewegungsinformation des Hilfs-Codeblocks angegeben wird, umfasst:
Erhalten eines ersten Bedingungsparameters und einer ersten Filterbedingung; und
Bestimmen, in einem Fall, dass der erste Bedingungsparameter die erste Filterbedingung nicht erfüllt, des zweiten Bedingungsparameters gemäß der Bildsuchbereichsinformation,
die durch die Referenz-Bewegungsinformation des Hilfs-Codeblocks angegeben wird;
wobei der erste Bedingungsparameter mindestens eines der folgenden umfasst: eine Anzahl von Hilfs-Codeblöcken des ersten Typs und eine Fläche eines Hilfs-Codeblocks des ersten Typs; und wobei der eine oder die mehreren Hilfs-Codeblöcke des ersten Typs Codeblöcke sind, die dazu eingerichtet sind, eine Referenzbildsuche auf einer ersten Referenzbildliste in den M Referenzbildlisten durchzuführen, wobei die erste Referenzbildliste eine Vorwärtsreferenzliste ist und der Hilfs-Codeblock des zweiten Typs zu Hilfs-Codeblöcken des Ziel-Codeblocks gehört; und
wobei die erste Filterbedingung ein Verhältnis einer Fläche der Hilfs-Codeblöcke des ersten Typs zu einer Flächensumme aller Hilfs-Codeblöcke umfasst, das größer als ein Flächenverhältnisschwellenwert ist.

4. Verfahren nach Anspruch 1, wobei das Bestimmen, in einem Fall, dass der erste Bedingungsparameter eine erste Filterbedingung erfüllt, der ersten Referenzbildliste als den Ziel-Referenzbildsuchbereich des Ziel-Codeblocks umfasst:
Bestimmen, in einem Fall, dass der erste Bedingungsparameter die erste Filterbedingung erfüllt, eines dritten Bedingungsparameters gemäß einem Referenzbild, das der Referenz-Bewegungsinformation des Hilfs-Codeblocks entspricht;
wobei der dritte Bedingungsparameter mindestens eines der folgenden umfasst: eine Anzahl von Hilfs-Codeblöcken des dritten Typs und eine Fläche eines Hilfs-Codeblocks des dritten Typs; wobei der Hilfs-Codeblock des dritten Typs ein Codeblock ist, der dazu eingerichtet ist, eine Referenzbildsuche auf einem Ziel-Referenzbild in der ersten Referenzbildliste durchzuführen, und der Hilfs-Codeblock des dritten Typs zu den Hilfs-Codeblöcken des Ziel-Codeblocks gehört; Bestimmen, in einem Fall, dass der dritte Bedingungsparameter eine dritte Filterbedingung erfüllt, das Ziel-Referenzbild in der ersten Referenzbildliste als den Ziel-Referenzbildsuchbereich des Ziel-Codeblocks; und
wobei die dritte Filterbedingung ein Verhältnis einer Fläche der Hilfs-Codeblöcke des dritten Typs zu einer Flächensumme aller Hilfs-Codeblöcke umfasst, das größer als ein Flächenverhältnisschwellenwert ist.

5. Verfahren nach Anspruch 2, wobei das Bestimmen, in einem Fall, dass der zweite Bedingungsparameter eine zweite Filterbedingung erfüllt, der zweiten Referenzbildliste als den Ziel-Referenzbildsuchbereich des Ziel-Codeblocks umfasst:
Bestimmen, in einem Fall, dass der zweite Bedingungsparameter die zweite Filterbedingung erfüllt, eines vierten Bedingungsparameters gemäß einem Referenzbild, das der Referenz-Bewegungsinformation des Hilfs-Codeblocks entspricht;
wobei der vierte Bedingungsparameter mindestens eines der folgenden umfasst: eine Anzahl von Hilfs-Codeblöcken des vierten Typs und eine Fläche eines Hilfs-Codeblocks des vierten Typs; wobei der Hilfs-Codeblock des vierten Typs ein Codeblock ist, der dazu eingerichtet ist, eine Referenzbildsuche auf einem Ziel-Referenzbild in der zweiten Referenzbildliste durchzuführen, und der Hilfs-Codeblock des vierten Typs zu den Hilfs-Codeblöcken des Ziel-Codeblocks gehört;
Bestimmen, in einem Fall, dass der vierte Bedingungsparameter eine vierte Filterbedingung erfüllt, das Ziel-Referenzbild in der zweiten Referenzbildliste als den Ziel-Referenzbildsuchbereich des Ziel-Codeblocks; und
wobei die vierte Filterbedingung ein Verhältnis einer Fläche der Hilfs-Codeblöcke des vierten Typs zu einer Flächensumme aller Hilfs-Codeblöcke umfasst, das größer als ein Flächenverhältnisschwellenwert ist.

6. Verfahren nach Anspruch 1, wobei das Bestimmen eines Ziel-Referenzbildsuchbereichs für den Ziel-Codeblock aus M Referenzbildlisten gemäß Bildsuchbereichsinformation, die durch die Referenz-Bewegungsinformation angegeben wird (S103), umfasst:
Bestimmen eines fünften Bedingungsparameters gemäß der Bildsuchbereichsinformation, die durch die Referenz-Bewegungsinformation angegeben wird;
wobei der fünfte Bedingungsparameter mindestens eines der folgenden umfasst: eine Anzahl von Hilfs-Codeblöcken des fünften Typs und eine Fläche eines Hilfs-Codeblocks des fünften Typs; wobei der Hilfs-Codeblock des fünften Typs ein Codeblock ist, der dazu eingerichtet ist, eine Referenzbildsuche auf Referenzsuchbildern in den M Referenzbildlisten durchzuführen, und der Hilfs-Codeblock des fünften Typs zu Hilfs-Codeblöcken des Ziel-Codeblocks gehört; Bestimmen, in einem Fall, dass der fünfte Bedingungsparameter eine fünfte Filterbedingung erfüllt, die Referenzsuchbilder als den Ziel-Referenzbildsuchbereich des Ziel-Codeblocks und;
wobei die fünfte Filterbedingung ein Verhältnis einer Fläche der Hilfs-Codeblöcke des fünften Typs zu einer Flächensumme aller Hilfs-Codeblöcke umfasst, das größer als ein Flächenverhältnisschwellenwert ist.

7. Bewegungsschätzungsvorrichtung in einem Codiervorgang, wobei die Vorrichtung umfasst:
eine Erfassungseinheit (501), die dazu eingerichtet ist, ein zu codierendes Videobild zu erhalten und einen zu codierenden Ziel-Codeblock aus dem zu codierenden Videobild zu bestimmen; wobei die Erfassungseinheit (501) ferner dazu eingerichtet ist: Referenz-Bewegungsinformation eines Hilfs-Codeblocks des Ziel-Codeblocks zu erhalten, wobei die Referenz-Bewegungsinformation des Hilfs-Codeblocks umfasst: Bewegungsinformation von N benachbarten Codeblöcken, die dem Ziel-Codeblock benachbart sind, und Bewegungsinformation, die in einer Referenz-Codeblock-Liste umfasst ist, und N eine ganze Zahl größer oder gleich 1 ist; und
eine Verarbeitungseinheit (502), die dazu eingerichtet ist, einen Ziel-Referenzbildsuchbereich für den Ziel-Codeblock aus M Referenzbildlisten gemäß Bildsuchbereichsinformation, die durch die Referenz-Bewegungsinformation angegeben wird, zu bestimmen, wobei M eine ganze Zahl größer als 1 ist;
wobei die Verarbeitungseinheit (502) ferner dazu eingerichtet ist, Bewegungsschätzung an dem Ziel-Codeblock gemäß dem Ziel-Referenzbildsuchbereich durchzuführen,
**dadurch gekennzeichnet, dass** das Bestimmen des Ziel-Referenzbildsuchbereichs für den Ziel-Codeblock aus M Referenzbildlisten gemäß Bildsuchbereichsinformation, die durch die Referenz-Bewegungsinformation angegeben wird (S103), umfasst:
Bestimmen eines ersten Bedingungsparameters gemäß der Bildsuchbereichsinformation, die durch die Referenz-Bewegungsinformation des Hilfs-Codeblocks angegeben wird;
wobei der erste Bedingungsparameter eine Fläche eines Hilfs-Codeblocks des ersten Typs umfasst; und wobei der eine oder die mehreren Hilfs-Codeblöcke des ersten Typs Codeblöcke sind, die dazu eingerichtet sind, eine Referenzbildsuche auf einer ersten Referenzbildliste in den M Referenzbildlisten durchzuführen, wobei die ein oder mehreren Hilfs-Codeblöcke des ersten Typs zu Hilfs-Codeblöcken des Ziel-Codeblocks gehören und die erste Referenzbildliste eine Vorwärtsreferenzliste ist; und
Bestimmen, in einem Fall, dass der erste Bedingungsparameter eine erste Filterbedingung erfüllt, die erste Referenzbildliste als den Ziel-Referenzbildsuchbereich des Ziel-Codeblocks,
wobei die erste Filterbedingung ein Verhältnis der Fläche des einen oder der mehreren Hilfs-Codeblöcke des ersten Typs zu einer Flächensumme aller Hilfs-Codeblöcke umfasst, das größer als ein Flächenverhältnisschwellenwert ist,
wobei, wenn es mehrere Hilfs-Codeblöcke des ersten Typs gibt, die Fläche des einen oder der mehreren Hilfs-Codeblöcke des ersten Typs eine Summe der Flächen aller Hilfs-Codeblöcke des ersten Typs bezeichnet.

8. Computergerät, umfassend:
einen Speicher (604), der dazu eingerichtet ist, ein Computerprogramm zu speichern; und
einen Prozessor (601), der dazu eingerichtet ist, das in dem Speicher (604) gespeicherte Computerprogramm auszuführen, um das Bewegungsschätzungsverfahren in einem Codiervorgang gemäß einem der Ansprüche 1 bis 7 zu implementieren.

9. Computerspeichermedium, das ein Computerprogramm speichert, das, wenn es durch einen Prozessor ausgeführt wird, das Bewegungsschätzungsverfahren in einem Codiervorgang gemäß einem der Ansprüche 1 bis 6 implementiert.

10. Computerprogrammprodukt, umfassend Computerbefehle, wobei die Computerbefehle in einem computerlesbaren Speichermedium gespeichert sind und ein Prozessor die Computerbefehle von dem computerlesbaren Speichermedium liest und ausführt, um das Bewegungsschätzungsverfahren in einem Codiervorgang gemäß einem der Ansprüche 1 bis 6 zu implementieren.

## Revendications

1. Procédé d'estimation de mouvement dans un processus de codage, dans lequel le procédé comprend :
l'obtention d'une trame vidéo à coder, et la détermination d'un bloc de code cible à coder à partir de la trame vidéo à coder (S101) ;
l'obtention d'informations de mouvement de référence d'un bloc de code auxiliaire du bloc de code cible (S102), les informations de mouvement de référence du bloc de code auxiliaire comprenant : des informations de mouvement de N blocs de code adjacents au bloc de code cible et des informations de mouvement comprises dans une liste de blocs de code de référence, et N étant un entier supérieur ou égal à 1 ;
la détermination d'une plage de recherche d'images de référence cible pour le bloc de code cible à partir de M listes d'images de référence selon des informations de plage de recherche d'images indiquées par les informations de mouvement de référence (S103), M étant un entier supérieur à 1 ; et
la réalisation d'une estimation de mouvement sur le bloc de code cible selon la plage de recherche d'images de référence cible (S104),
**caractérisé en ce que** la détermination d'une plage de recherche d'images de référence cible pour le bloc de code cible à partir de M listes d'images de référence selon des informations de plage de recherche d'images indiquées par les informations de mouvement de référence (S103) comprend :
la détermination d'un premier paramètre de condition selon les informations de plage de recherche d'images indiquées par les informations de mouvement de référence du bloc de code auxiliaire ;
le premier paramètre de condition comprenant une superficie d'un ou plusieurs blocs de code auxiliaires de premier type ;
et le ou les blocs de code auxiliaires de premier type étant un bloc de code pour effectuer une recherche d'images de référence sur une première liste d'images de référence dans les M listes d'images de référence, le ou les blocs de code auxiliaires de premier type appartenant aux blocs de code auxiliaires du bloc de code cible, et la première liste d'images de référence étant une liste de référence avant ; et
la détermination, dans le cas où le premier paramètre de condition satisfait une première condition de filtrage, de la première liste d'images de référence comme plage de recherche d'images de référence cible du bloc de code cible,
dans lequel la première condition de filtrage comprend un rapport de la superficie du ou des blocs de code auxiliaires de premier type à la somme des superficies de tous les blocs de code auxiliaires qui est supérieur à un seuil de rapport de superficie,
dans lequel si plusieurs blocs de code auxiliaires de premier type sont présents, la superficie du ou des blocs de code auxiliaires de premier type fait référence à une somme des superficies de tous les blocs de code auxiliaires de premier type.

2. Procédé selon la revendication 1, dans lequel la détermination d'une plage de recherche d'images de référence cible pour le bloc de code cible à partir de M listes d'images de référence selon des informations de plage de recherche d'images indiquées par les informations de mouvement de référence (S103) comprend :
la détermination d'un deuxième paramètre de condition selon les informations de plage de recherche d'images indiquées par les informations de mouvement de référence du bloc de code auxiliaire ;
le deuxième paramètre de condition comprenant au moins l'un des éléments suivants : une quantité de blocs de code auxiliaires de deuxième type et une superficie d'un bloc de code auxiliaire de deuxième type ; dans lequel le bloc de code auxiliaire de deuxième type est un bloc de code configuré pour effectuer une recherche d'images de référence sur une deuxième liste d'images de référence dans les M listes d'images de référence, la deuxième liste d'images de référence étant une liste de référence arrière, et le bloc de code auxiliaire de deuxième type appartient aux blocs de code auxiliaires du bloc de code cible ;
la détermination, dans le cas où le deuxième paramètre de condition satisfait une deuxième condition de filtrage, de la deuxième liste d'images de référence comme plage de recherche d'images de référence cible du bloc de code cible ; et
dans lequel la deuxième condition de filtrage comprend un rapport de la superficie des blocs de code auxiliaires de deuxième type à la somme des superficies de tous les blocs de code auxiliaires qui est supérieur à un seuil de rapport de superficie.

3. Procédé selon la revendication 2, dans lequel la détermination d'un deuxième paramètre de condition selon les informations de plage de recherche d'images indiquées par les informations de mouvement de référence du bloc de code auxiliaire comprend :
l'obtention d'un premier paramètre de condition et d'une première condition de filtrage ; et
la détermination, dans le cas où le premier paramètre de condition ne satisfait pas la première condition de filtrage, du deuxième paramètre de condition selon les informations de plage de recherche d'images indiquées par les informations de mouvement de référence du bloc de code auxiliaire ;
le premier paramètre de condition comprenant au moins l'un des éléments suivants : une quantité de blocs de code auxiliaires de premier type et une superficie d'un bloc de code auxiliaire de premier type ; et le ou les blocs de code auxiliaires de premier type étant un bloc de code configuré pour effectuer une recherche d'images de référence sur une première liste d'images de référence dans les M listes d'images de référence, la première liste d'images de référence étant une liste de référence avant, et le bloc de code auxiliaire de deuxième type appartient aux blocs de code auxiliaires du bloc de code cible ; et
dans lequel la première condition de filtrage comprend un rapport de la superficie des blocs de code auxiliaires de premier type à la somme des superficies de tous les blocs de code auxiliaires qui est supérieur à un seuil de rapport de superficie.

4. Procédé selon la revendication 1, dans lequel la détermination, dans le cas où le premier paramètre de condition satisfait une première condition de filtrage, de la première liste d'images de référence comme plage de recherche d'images de référence cible du bloc de code cible comprend :
la détermination, dans le cas où le premier paramètre de condition satisfait la première condition de filtrage, d'un troisième paramètre de condition selon une image de référence correspondant aux informations de mouvement de référence du bloc de code auxiliaire ;
le troisième paramètre de condition comprenant au moins l'un des éléments suivants : une quantité de blocs de code auxiliaires de troisième type et une superficie d'un bloc de code auxiliaire de troisième type ; dans lequel le bloc de code auxiliaire de troisième type est un bloc de code configuré pour effectuer une recherche d'images de référence sur une image de référence cible dans la première liste d'images de référence, et le bloc de code auxiliaire de troisième type appartient aux blocs de code auxiliaires du bloc de code cible ; la détermination, dans le cas où le troisième paramètre de condition satisfait une troisième condition de filtrage, de l'image de référence cible dans la première liste d'images de référence comme plage de recherche d'images de référence cible du bloc de code cible ; et
dans lequel la troisième condition de filtrage comprend un rapport de la superficie des blocs de code auxiliaires de troisième type à la somme des superficies de tous les blocs de code auxiliaires qui est supérieur à un seuil de rapport de superficie.

5. Procédé selon la revendication 2, dans lequel la détermination, dans le cas où le deuxième paramètre de condition satisfait une deuxième condition de filtrage, de la deuxième liste d'images de référence comme plage de recherche d'images de référence cible du bloc de code cible comprend :
la détermination, dans le cas où le deuxième paramètre de condition satisfait la deuxième condition de filtrage, d'un quatrième paramètre de condition selon une image de référence correspondant aux informations de mouvement de référence du bloc de code auxiliaire ;
le quatrième paramètre de condition comprenant au moins l'un des éléments suivants : une quantité de blocs de code auxiliaires de quatrième type et une superficie d'un bloc de code auxiliaire de quatrième type ; dans lequel le bloc de code auxiliaire de quatrième type est un bloc de code configuré pour effectuer une recherche d'images de référence sur une image de référence cible dans la deuxième liste d'images de référence, et le bloc de code auxiliaire de quatrième type appartient aux blocs de code auxiliaires du bloc de code cible ;
la détermination, dans le cas où le quatrième paramètre de condition satisfait une quatrième condition de filtrage, de l'image de référence cible dans la deuxième liste d'images de référence comme plage de recherche d'images de référence cible du bloc de code cible ; et
dans lequel la quatrième condition de filtrage comprend un rapport de la superficie des blocs de code auxiliaires de quatrième type à la somme des superficies de tous les blocs de code auxiliaires qui est supérieur à un seuil de rapport de superficie.

6. Procédé selon la revendication 1, dans lequel la détermination d'une plage de recherche d'images de référence cible pour le bloc de code cible à partir de M listes d'images de référence selon des informations de plage de recherche d'images indiquées par les informations de mouvement de référence (S103) comprend :
la détermination d'un cinquième paramètre de condition selon les informations de plage de recherche d'images indiquées par les informations de mouvement de référence ;
le cinquième paramètre de condition comprenant au moins l'un des éléments suivants : une quantité de blocs de code auxiliaires de cinquième type et une superficie d'un bloc de code auxiliaire de cinquième type ; dans lequel le bloc de code auxiliaire de cinquième type est un bloc de code configuré pour effectuer une recherche d'images de référence sur des images de recherche de référence dans les M listes d'images de référence, et le bloc de code auxiliaire de cinquième type appartient aux blocs de code auxiliaires du bloc de code cible ; la détermination, dans le cas où le cinquième paramètre de condition satisfait une cinquième condition de filtrage, des images de recherche de référence comme plage de recherche d'images de référence cible du bloc de code cible ; et
dans lequel la cinquième condition de filtrage comprend un rapport de la superficie des blocs de code auxiliaires de cinquième type à la somme des superficies de tous les blocs de code auxiliaires qui est supérieur à un seuil de rapport de superficie.

7. Appareil d'estimation de mouvement dans un processus de codage, dans lequel l'appareil comprend :
une unité d'obtention (501), qui est configurée pour obtenir une trame vidéo à coder, et déterminer un bloc de code cible à coder à partir de la trame vidéo à coder ;
l'unité d'obtention (501) étant en outre configurée pour : obtenir des informations de mouvement de référence d'un bloc de code auxiliaire du bloc de code cible, les informations de mouvement de référence du bloc de code auxiliaire comprenant : des informations de mouvement de N blocs de code adjacents au bloc de code cible et des informations de mouvement comprises dans une liste de blocs de code de référence, et N étant un entier supérieur ou égal à 1 ; et
une unité de traitement (502), qui est configurée pour déterminer une plage de recherche d'images de référence cible pour le bloc de code cible à partir de M listes d'images de référence selon des informations de plage de recherche d'images indiquées par les informations de mouvement de référence, M étant un entier supérieur à 1 ;
l'unité de traitement (502) étant en outre configurée pour réaliser une estimation de mouvement sur le bloc de code cible selon la plage de recherche d'images de référence cible,
**caractérisé en ce que** la détermination de la plage de recherche d'images de référence cible pour le bloc de code cible à partir de M listes d'images de référence selon des informations de plage de recherche d'images indiquées par les informations de mouvement de référence (S103) comprend :
la détermination d'un premier paramètre de condition selon les informations de plage de recherche d'images indiquées par les informations de mouvement de référence du bloc de code auxiliaire ;
le premier paramètre de condition comprenant une superficie d'un bloc de code auxiliaire de premier type ; et le ou les blocs de code auxiliaires de premier type étant un bloc de code pour effectuer une recherche d'images de référence sur une première liste d'images de référence dans les M listes d'images de référence, le ou les blocs de code auxiliaires de premier type appartenant aux blocs de code auxiliaires du bloc de code cible, et la première liste d'images de référence étant une liste de référence avant ; et
la détermination, dans le cas où le premier paramètre de condition satisfait une première condition de filtrage, de la première liste d'images de référence comme plage de recherche d'images de référence cible du bloc de code cible,
dans lequel la première condition de filtrage comprend un rapport de la superficie du ou des blocs de code auxiliaires de premier type à la somme des superficies de tous les blocs de code auxiliaires qui est supérieur à un seuil de rapport de superficie,
dans lequel si plusieurs blocs de code auxiliaires de premier type sont présents, la superficie du ou des blocs de code auxiliaires de premier type fait référence à une somme des superficies de tous les blocs de code auxiliaires de premier type.

8. Dispositif informatique, comprenant :
une mémoire (604), qui est configurée pour stocker un programme informatique ; et
un processeur (601), qui est configuré pour exécuter le programme informatique stocké dans la mémoire (604) afin de mettre en œuvre le procédé d'estimation de mouvement dans un processus de codage selon l'une quelconque des revendications 1 à 7.

9. Support de stockage informatique, stockant un programme informatique, lequel, lorsqu'il est exécuté par un processeur, met en œuvre le procédé d'estimation de mouvement dans un processus de codage selon l'une quelconque des revendications 1 à 6.

10. Produit-programme d'ordinateur, comprenant des instructions informatiques, les instructions informatiques étant stockées dans un support de stockage lisible par ordinateur, et un processeur lisant et exécutant les instructions informatiques à partir du support de stockage lisible par ordinateur, afin de mettre en œuvre le procédé d'estimation de mouvement dans un processus de codage selon l'une quelconque des revendications 1 à 6.
